# EUROPEAN PATENT APPLICATION

(11) **EP 4 797 650 A1**
(43) Date of publication of application: **26.08.2026**
(21) Application number: 24890146.4
(22) Date of filing: 08.07.2024
(51) Int. Cl.: H04L 47/125

(54) **LINK CONGESTION PROCESSING METHOD, COMMUNICATION SYSTEM, AND RELATED APPARATUS**

(30) Priority: 17.11.2023 CN 202311548166
(71) Applicant: HUAWEI TECHNOLOGIES CO., LTD., Shenzhen, Guangdong 518129 (CN)
(72) Inventor: SHEN, Ming, Shenzhen, Guangdong 518129 (CN); WU, Hong, Shenzhen, Guangdong 518129 (CN); WANG, Shuqiang, Shenzhen, Guangdong 518129 (CN); SHI, Qinru, Shenzhen, Guangdong 518129 (CN); HU, Zhibo, Shenzhen, Guangdong 518129 (CN); WANG, Lili, Shenzhen, Guangdong 518129 (CN)
(74) Representative: Pfenning, Meinig & Partner mbB
(86) International application number: PCT/CN2024/104294
(87) International publication number: WO 2025/102778

(57) **Abstract**

This application discloses a link congestion processing method, a communication system, and a related apparatus, and pertains to the field of communication technologies. The method is applied to a first network device in a first network. The first network device and a second network device are traffic ingress devices of the first network. The first network device is connected to a third network device in a second network through a first link. The second network device is connected to a fourth network device in the second network through a second link. The method includes: obtaining quality information of the first link and quality information of the second link; and if it is determined, based on the obtained quality information, that a traffic adjustment condition is satisfied, adjusting target traffic on the first link to the second link. According to the solutions, only the traffic ingress devices need to be configured correspondingly, and deployment is simple. The solutions do not require load balancing among routes on a plurality of links or frequent route changes, so that network-wide route flooding does not occur.

## Description

This application claims priority to Chinese Patent Application No. 202311548166.2, filed on November 17, 2023 and entitled "LINK CONGESTION PROCESSING METHOD, COMMUNICATION SYSTEM, AND RELATED APPARATUS", which is incorporated herein by reference in its entirety.

### TECHNICAL FIELD

This application relates to the field of communication technologies, and in particular, to a link congestion processing method, a communication system, and a related apparatus.

### BACKGROUND

As networks continuously develop, users require increasingly high network stability and reliability. Consequently, relevant personnel deploy a plurality of links to a same destination address during network deployment. If a part of the plurality of links is congested or faulty, traffic on the congested or faulty link may be transferred to another link to relieve traffic anomaly caused by the congestion or fault.

A metropolitan area network and a backbone network are used as an example. The metropolitan area network includes a plurality of core devices, for example, a plurality of core routers (core routers, CRs). The backbone network also includes a plurality of core devices. For ease of description, the core devices in the metropolitan area network are referred to as metro cores for short, and the core devices in the backbone network are referred to as backbone cores for short. Generally, the metropolitan area network is connected to the plurality of backbone cores in the backbone network through the plurality of metro cores. One link or a plurality of links may be deployed between each metro core and each backbone core. In this way, the plurality of links between the metropolitan area network and the backbone network can be configured to balance traffic based on a load balancing ratio. If a part of the plurality of links is congested or faulty, traffic on the congested or faulty link may be transferred to another link.

However, if a plurality of links between a backbone core and a metro core are congested but not all are faulty, because the backbone core is not disconnected from the metro core, the backbone network cannot automatically sense the congestion or fault and therefore cannot automatically re-allocate the load balancing ratio. Consequently, traffic congestion still occurs between the backbone core and the metro core. However, manual adjustment of the load balancing ratio is inefficient and error-prone. How to quickly alleviate inter-AS link congestion is a research hotspot in the industry.

### SUMMARY

This application provides a link congestion processing method, a communication system, and a related apparatus, which are simple to deploy and easy to promote and implement because inter-AS network congestion can be effectively alleviated and no additional configuration is needed for all network devices on a link. In addition, traffic can be adjusted when load balancing among routes on a plurality of links is not required, so that network-wide route flooding does not occur. The technical solutions are as follows:

According to a first aspect, a link congestion processing method is provided, applied to a first network device. The first network device belongs to a first network. The first network further includes a second network device. The first network device and the second network device are traffic ingress devices of the first network. The first network device is connected to a third network device in a second network through a first link. The second network device is connected to a fourth network device in the second network through a second link. The method includes: obtaining first quality information and second quality information; and if it is determined, based on the first quality information and the second quality information, that a traffic adjustment condition is satisfied, adjusting target traffic on the first link to the second link. The first quality information includes quality information of the first link. The second quality information includes quality information of the second link.

A traffic ingress device in the first network can obtain quality information of a link with the second network, determine a congestion status based on the quality information, and perform traffic adjustment if the link is congested. In this solution, no additional configuration is needed for all network devices on the link, and only the traffic ingress device in the first network needs to be configured correspondingly. This solution does not depend on another device, and is simple to deploy and easy to promote and implement. This solution also does not require load balancing among routes on a plurality of links, to resolve a problem that traffic cannot be adjusted in a scenario of no load balancing among routes in the related technology. This solution also does not require frequent route changes, so that network-wide route flooding does not occur.

Optionally, the first network device is further connected to the fourth network device through a third link, and the second network device is further connected to the third network device through a fourth link. The method further includes: obtaining third quality information and fourth quality information. The third quality information includes quality information of the third link. The fourth quality information includes quality information of the fourth link. The third quality information and the fourth quality information are also used to determine whether the traffic adjustment condition is satisfied. In other words, this solution is also applicable to a complex networking architecture.

Optionally, the first network further includes a fifth network device, and the first network device is further connected to the fifth network device through a fifth link. The method further includes: obtaining fifth quality information. The fifth quality information includes quality information of the fifth link. The fifth quality information is also used to determine whether the traffic adjustment condition is satisfied. In other words, quality information of a link in the first network can also be used as reference information for traffic adjustment.

Optionally, an external border gateway protocol (external border gateway protocol, EBGP) peer relationship is established between the first network device and the third network device and between the second network device and the fourth network device; and/or an internal border gateway protocol (internal border gateway protocol, IBGP) peer relationship is established between the first network device and the second network device and between the third network device and the fourth network device.

Optionally, the second quality information is obtained through a border gateway protocol-link state (BGP link state, LS) route.

The quality information includes one or more of bandwidth information, a packet loss rate, a link latency, or a link congestion status.

Optionally, the bandwidth information includes a total bandwidth and/or a bandwidth occupancy.

The traffic adjustment condition is first described.

Optionally, the traffic adjustment condition includes that the first quality information exceeds a first threshold, that is, a link connected to the third network device is congested.

Optionally, the traffic adjustment condition includes that a difference between the first quality information and the second quality information exceeds a second threshold, that is, there is room on the second link to balance traffic on the first link.

Optionally, the traffic adjustment condition includes that a route adjustment policy generated by the second network device does not exist on the first network device. The route adjustment policy is used to alleviate link congestion between the first network and the second network through traffic adjustment, such as adjusting some traffic on the second link to the first link. The second network device is triggered to generate the route adjustment policy upon congestion of the second link. If the route adjustment policy generated by the second network device exists on the first network device, traffic that flows to the first network device according to the route adjustment policy exists on the first network device, and the first network device may also adjust the traffic, resulting in a traffic adjustment conflict. Therefore, to prevent the traffic adjustment conflict, the traffic adjustment condition further includes that the route adjustment policy generated by the second network device does not exist on the first network device.

The following describes how to determine the target traffic that needs to be adjusted.

Optionally, the quality information includes the total bandwidth and the bandwidth occupancy. Adjusting the target traffic on the first link to the second link by the first network device includes: determining a traffic adjustment value based on the total bandwidth and the bandwidth occupancy in the first quality information and the total bandwidth and the bandwidth occupancy in the second quality information; determining a first target flow based on the traffic adjustment value; and adjusting the first target flow to the second link. A traffic value of the first target flow matches the traffic adjustment value. In other words, the traffic adjustment value is first determined based on bandwidth information of the links, and then the first target flow is determined based on the traffic adjustment value. The target traffic includes traffic of the first target flow.

Determining the traffic adjustment value based on the total bandwidth and the bandwidth occupancy in the first quality information and the total bandwidth and the bandwidth occupancy in the second quality information by the first network device includes: determining a bandwidth ratio between the first link and the second link based on the total bandwidths in the first quality information and the second quality information; determining a first adjustment value based on the bandwidth ratio, the total bandwidth and the bandwidth occupancy in the first quality information, and the total bandwidth and the bandwidth occupancy in the second quality information, where the first adjustment value satisfies that traffic on the first link and traffic on the second link still meet the bandwidth ratio after traffic whose total size is the first adjustment value on the first link is adjusted to the second link; and determining the traffic adjustment value based on the first adjustment value. In other words, an adjustment target, namely, the first adjustment value, is first determined based on the bandwidth ratio, and then the traffic adjustment value is determined based on the adjustment target.

Determining the traffic adjustment value based on the first adjustment value by the first network device includes: determining, based on the first threshold and a total bandwidth and a bandwidth occupancy of each of at least one link connected to the fourth network device, a second adjustment value corresponding to each link, where the first threshold is a threshold used to determine link congestion; and determining a smallest one of the first adjustment value and the second adjustment value corresponding to the at least one link as the traffic adjustment value. In other words, to prevent excessive adjustment, the second adjustment value should be determined by considering bandwidth information of each link, and the smallest adjustment value is selected as the traffic adjustment value.

Determining the first target flow based on the traffic adjustment value by the first network device includes: selecting top N flows from at least one flow as the first target flow in descending order of traffic size. A total traffic value of the N flows does not exceed the traffic adjustment value. N is a positive integer. In other words, to adjust as few flows as possible, flows that need to be adjusted may be selected in descending order of traffic size to reduce impact on the flows.

Optionally, the total size of the N flows does not exceed α times the traffic adjustment value. α is greater than 0 and less than 1. In other words, to prevent excessive adjustment, it is unnecessary to adjust all traffic that may need to be adjusted in one traffic adjustment process.

Optionally, adjusting the target traffic on the first link to the second link by the first network device includes: reducing a priority of a first target route sent by the first network device to the second network. A prefix of the first target route is a destination address of the target traffic. In other words, the first network device adjusts the target traffic on the first link to the second link by reducing a route priority of a flow corresponding to the target traffic on the first network device.

Optionally, adjusting the target traffic on the first network device to the second link by the first network device includes: sending a route adjustment policy to the second network device. The route adjustment policy indicates the second network device to increase a priority of a second target route sent by the second network device to the second network. A prefix of the second target route is the destination address of the target traffic. In other words, the first network device may alternatively indicate, through the route adjustment policy, the second network device to increase a route priority of the flow corresponding to the target traffic on the second network device.

It can be learned that in this solution, traffic adjustment can be implemented by changing a route priority. A link congestion processing function in this solution is configured only for the traffic ingress device in the first network, and no additional configuration is needed for all network devices on the link. In the related technology, a link bandwidth extended community attribute needs to be configured and advertised for all node devices on a path through which traffic passes. Therefore, this solution does not depend on another device, and is simple to deploy and easy to promote and implement.

The route adjustment policy is sent through a routing policy distribution (routing policy distribution, RPD) route.

Optionally, the target route is sent through a border gateway protocol BGP route.

The foregoing describes an implementation process in which the first network device performs traffic adjustment. In this application, the second network device can also implement traffic adjustment according to a principle of the foregoing implementation process. Details are not described herein again.

When the congestion of the first link is eliminated, the first network device can further restore, to the first link, some or all of the traffic adjusted to the second link, to reduce a load of the second link. The following describes a traffic restoration process.

Optionally, the method further includes: if it is determined, based on the first quality information and the second quality information, that a traffic restoration condition is satisfied, the first network device restores a part or all of the target traffic from the second link to the first link.

Optionally, the traffic restoration condition includes that the first quality information is less than a third threshold. That is, congestion of a link connected to the third network device is eliminated.

Optionally, the traffic restoration condition includes that the second quality information exceeds a fourth threshold, and/or a difference between the second quality information and the first quality information exceeds a fifth threshold. That is, a link connected to the fourth network device is congested, and/or there is room on the first link to balance traffic on the second link.

Restoring the part or all of the target traffic from the second link to the first link by the first network device includes: selecting top M flows from a flow corresponding to the target traffic as a second target flow in ascending order of traffic size, where M is a positive integer; and restoring the second target flow from the second link to the first link. In other words, considering that neither the first link nor the second link is congested in this case, to prevent traffic flapping caused by excessive traffic adjustment, that is, to prevent a large traffic fluctuation, flows that need to be restored are sequentially selected in ascending order of traffic size. In addition, to prevent excessive restoration, at least one flow in the first target flow is restored to the first link in one traffic restoration process. When the first link remains uncongested continuously, the other flows in the first target flow may be gradually restored to the first link in subsequent traffic restoration processes.

Optionally, a total size of the M flows does not exceed a sixth threshold. In other words, to prevent excessive restoration, a traffic restoration value may be limited through a threshold.

Optionally, the method further includes: if anomaly occurs in a traffic adjustment process, exiting the traffic adjustment process. The anomaly includes at least one of the following cases: traffic on the second link is being adjusted to the first link; and the first network device is disconnected from the third network device. The first network device can further stop traffic adjustment in time when a traffic adjustment conflict, device disconnection, or the like, occurs, to avoid wasting computing resources or the like.

According to a second aspect, a communication apparatus is provided. The communication apparatus includes a processor and a memory. The memory is configured to store a program for performing the link congestion processing method according to the first aspect, and data used to implement the link congestion processing method according to the first aspect. The processor is configured to execute the program stored in the memory. The communication apparatus may further include a communication bus. The communication bus is configured to establish a connection between the processor and the memory. Optionally, the communication apparatus is configured to be implemented as a part or all of a communication device (for example, a network device).

According to a third aspect, a link congestion processing apparatus is provided. The link congestion processing apparatus has a function of implementing behavior of the link congestion processing method according to the first aspect. The link congestion processing apparatus includes one or more modules. The one or more modules are configured to implement the link congestion processing method according to the first aspect.

According to a fourth aspect, a communication system is provided. The communication system includes a first network device and a second network device. The first network device and the second network device are traffic ingress devices of a first network. The first network device is connected to a third network device in a second network through a link. The second network device is connected to a fourth network device in the second network through a link. The first network device is configured to perform steps of the link congestion processing method according to the first aspect.

According to a fifth aspect, a computer-readable storage medium is provided. The computer-readable storage medium stores instructions. When the instructions are run on a computer, the computer is enabled to perform the link congestion processing method according to the first aspect.

According to a sixth aspect, a computer program product including instructions is provided. When the instructions are run on a computer, the computer is enabled to perform the link congestion processing method according to the first aspect.

Technical effects obtained in the second aspect to the sixth aspect are similar to technical effects obtained by using corresponding technical means in the first aspect. Details are not described herein again.

### BRIEF DESCRIPTION OF DRAWINGS

FIG. 1 is a diagram of a system architecture related to a link congestion processing method according to an embodiment of this application;
FIG. 2 is a diagram of another system architecture related to a link congestion processing method according to an embodiment of this application;
FIG. 3 is a diagram of another system architecture related to a congestion processing method according to an embodiment of this application;
FIG. 4 is a diagram of another system architecture related to a congestion processing method according to an embodiment of this application;
FIG. 5 is a diagram of another system architecture related to a congestion processing method according to an embodiment of this application;
FIG. 6 is a flowchart of a link congestion processing method according to an embodiment of this application;
FIG. 7 is a diagram of another system architecture related to a congestion processing method according to an embodiment of this application;
FIG. 8 is a flowchart of another link congestion processing method according to an embodiment of this application;
FIG. 9A and FIG. 9B are a flowchart of another link congestion processing method according to an embodiment of this application;
FIG. 10 is a diagram of a structure of a link congestion processing apparatus according to an embodiment of this application;
FIG. 11 is a diagram of a structure of another link congestion processing apparatus according to an embodiment of this application;
FIG. 12 is a diagram of a structure of a network device according to an embodiment of this application;
FIG. 13 is a diagram of a structure of another network device according to an embodiment of this application; and
FIG. 14 is a diagram of a structure of another network device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, a system architecture and an implementation environment in embodiments of this application are first described.

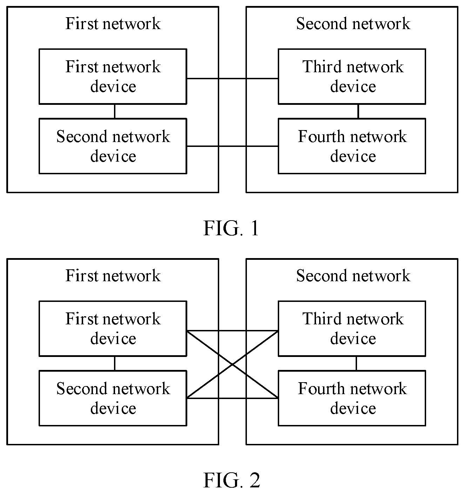

FIG. 1 is a diagram of a system architecture related to a link congestion processing method according to an embodiment of this application. With reference to FIG. 1, the system architecture includes a first network and a second network. The first network includes a first network device and a second network device. The second network includes a third network device and a fourth network device. The first network device is connected to the third network device through a first link. The second network device is connected to the fourth network device through a second link.

The first network device and the second network device are traffic ingress devices of the first network. That is, the first network device and the second network device are configured to receive a data flow (referred to as a flow for short) of the second network. For example, the first network device is configured to receive, through the first link, a flow sent by the third network device, and the second network device is configured to receive, through the second link, a flow sent by the fourth network device. Correspondingly, the third network device and the fourth network device are traffic egress devices of the second network. For example, the third network device is configured to send one part of the flow of the second network to the first network device through the first link, and the fourth network device is configured to send the other part of the flow of the second network to the second network device through the second link.

In some embodiments, the first network device and the second network device may further be traffic egress devices of the first network. That is, the first network device and the second network device are further configured to forward a flow of the first network to the second network. For example, the first network device is further configured to send one part of the flow of the first network to the third network device through the first link, and the second network device is further configured to send the other part of the flow of the first network to the fourth network device through the second link. Correspondingly, the third network device and the fourth network device are further traffic ingress devices of the second network. For example, the third network device is further configured to receive, through the first link, a flow sent by the first network device, and the fourth network device is further configured to receive, through the second link, a flow sent by the second network device.

In embodiments of this application, when the first network device and the second network device are traffic ingress devices of the first network, both the first network device and the second network device can use this solution to alleviate congestion of the first link and the second link. Similarly, when the third network device and the fourth network device are traffic ingress devices of the second network device, the third network device and the fourth network device can also use a similar solution to alleviate congestion of the first link and the second link. Simply speaking, this solution is applied to a traffic ingress device in a network.

Optionally, the first link includes at least one link, and the second link also includes at least one link. For example, the first link includes five links, and the second link includes one link. In some embodiments, a plurality of links included in the first link are configured to load-balance traffic between the first network device and the third network device. A load balancing manner is not limited in embodiments of this application, for example, may be equal cost multipath, unequal cost multipath (unequal cost multipath, UCMP), or the like.

Optionally, the first network device is further connected to the second network device through a link, and/or the third network device is further connected to the fourth network device through a link. When the first network device is further connected to the second network device through the link, the second network device is configured to obtain, through the link, first quality information sent by the first network device, and the first network device is configured to obtain, through the link, second quality information sent by the second network device. Certainly, regardless of whether a link is established between the first network device and the second network device, the first network device and the second network device may respectively obtain the second quality information and the first quality information through a management device or a control device in the first network. In other words, when the first network further includes the management device or the control device, the first network device and the second network device respectively report the first quality information and the second quality information to the management device or the control device, and the management device or the control device synchronizes the first quality information to the second network device and the second quality information to the first network device. The first quality information is quality information of the first link. The second quality information is quality information of the second link.

It can be learned that the system architecture shown in FIG. 1 may be considered as a square-shaped communication system. Embodiments of this application may also be applied to a V-shaped communication system. The V-shaped communication system is understood with reference to FIG. 2.

FIG. 2 is a diagram of another system architecture related to a link congestion processing method according to an embodiment of this application. The V-shaped communication system shown in FIG. 2 is different from the square-shaped communication system shown in FIG. 1 mainly in that the first network device is further connected to the fourth network device through a third link and the second network device is further connected to the third network device through a fourth link.

When the first network device and the second network device are traffic ingress devices of the first network, the first network device is further configured to receive, through the third link, the other part of the flow sent by the fourth network device, and the second network device is further configured to receive, through the fourth link, the other part of the flow sent by the third network device. When the first network device and the second network device are traffic egress devices of the first network, the first network device is further configured to send the other part of the flow of the first network to the fourth network device through the third link, and the second network device is further configured to send the other part of the flow of the first network to the third network device through the fourth link.

In some embodiments, the first link and the fourth link are configured to balance, based on a first load balancing ratio, traffic sent to the third network device, and/or the second link and the third link are configured to balance, based on a second load balancing ratio, traffic sent to the fourth network device. The first load balancing ratio and the second load balancing ratio are the same, or may be different. A load balancing manner may be equal cost multipath, UCMP, or the like. In some other embodiments, the first network device and the second network device each send a flow to the second network based on configured routing information instead of a load balancing ratio. The configured routing information indicates fixed flow information. That is, the first link, the second link, the third link, and the fourth link are all used to send a fixed flow.

Optionally, the third link includes at least one link, and the fourth link also includes at least one link. For example, the third link includes three links, and the fourth link includes one link. In some embodiments, a plurality of links included in the third link are configured to load-balance traffic between the first network device and the fourth network device. A load balancing manner is not limited in embodiments of this application, for example, may be equal cost multipath, UCMP, or the like.

Optionally, the first network device is further configured to obtain third quality information and fourth quality information. The third quality information is quality information of the third link. The fourth quality information is quality information of the fourth link. The first network device may obtain the fourth quality information through the link between the first network device and the second network device, or may obtain the fourth quality information through the management device or the control device. Similarly, the second network device may also obtain the third quality information through the link between the first network device and the second network device, or may obtain the third quality information through the management device or the control device.

An EBGP peer relationship is established between the first network device and the third network device and between the second network device and the fourth network device; and/or an IBGP peer relationship is established between the first network device and the second network device and between the third network device and the fourth network device. In other words, a connection may be established between the first network and the second network based on EBGP, and a connection may be established in the first network based on IBGP. Certainly, a connection may alternatively be established between the first network and the second network based on another protocol, and a connection may alternatively be established in the first network based on another protocol. This is not limited in embodiments of this application. In addition, a connection manner and a connection relationship in the second network are not limited in embodiments of this application.

The EBGP peer relationship is used as an example. The first network device can obtain the first quality information by enabling a BGP egress peer engineering (egress peer engineering, EPE) function for the third network device. Similarly, the second network device can also obtain the second quality information by enabling the BGP EPE function for the fourth network device, and exchange the second quality information to the first network device. Optionally, the first network device can further obtain the third quality information by enabling the BGP EPE function for the fourth network device. Similarly, the second network device can also obtain the fourth quality information by enabling the BGP EPE function for the third network device, and exchange the fourth quality information to the first network device. The BGP EPE function is a function defined in RFC 9087 and is not described in this specification.

In some embodiments, a BGP-LS address family peer relationship is established between the first network device and the second network device. The first network device can obtain the second quality information and/or the fourth quality information through a BGP-LS route. Similarly, the second network device can also obtain the first quality information and the third quality information through a BGP-LS route.

Optionally, a BGP RPD address family peer relationship is further established between the first network device and the second network device. The first network device can send a route adjustment policy to the second network device through an RPD route. The route adjustment policy is used to alleviate link congestion between the first network and the second network.

The system architectures shown in FIG. 1 and FIG. 2 may be respectively considered as a dual-core square-shaped communication system and a dual-core V-shaped communication system. That is, both the first network device and the second network device are core devices of the first network, and both the third network device and the fourth network device are core devices of the second network. In addition, this solution can also be applied to a square-shaped communication system with more cores and a V-shaped communication system with more cores, for example, applied to a quad-core square-shaped communication system and a quad-core V-shaped communication system. A specific implementation in which a multi-core communication system uses this solution to alleviate link congestion between core devices is similar to a specific implementation for a dual-core communication system.

In some embodiments, the first network and the second network may further include more network devices. For example, the first network further includes a fifth network device. The fifth network device is connected to the first network device through a fifth link. The first network device is further configured to obtain fifth quality information. The fifth quality information is quality information of the fifth link. Optionally, the first network device can further synchronize the fifth quality information to the second network device. A synchronization manner may be direct synchronization through the link between the first network device and the second network device, or may be indirect synchronization through the management device or the control device. For another example, the first network further includes a sixth network device. The sixth network device is connected to the second network device through a sixth link. The first network device is further configured to obtain sixth quality information. The sixth quality information is quality information of the sixth link. Optionally, the second network device is configured to obtain the sixth quality information through the sixth link, and synchronize the sixth quality information to the first network device. A synchronization manner is similar to the foregoing synchronization manner, and details are not described herein again.

Any one of the foregoing network devices may be a router, a switch, a bridge, or another communication apparatus in any form.

The first network and the second network may be any type of network. This is not limited in embodiments of this application. For example, in an embodiment, the first network is a metropolitan area network, and the second network is a backbone network. In another embodiment, the first network is a convergence network, and the second network is a metropolitan area network. In another embodiment, both the first network and the second network are metropolitan area networks.

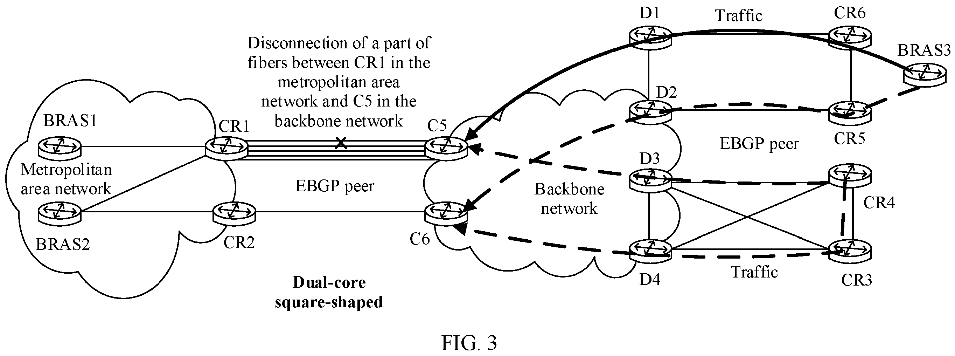

For example, the first network is a metropolitan area network, and the second network is a backbone network. The first network device and the second network device are core devices (referred to as metro cores for short) in the metropolitan area network. The third network device and the fourth network device are core devices (referred to as backbone cores for short) in the backbone network. A networking mode of the metropolitan area network and the backbone network is understood with reference to FIG. 3.

FIG. 3 is a diagram of another system architecture related to a congestion processing method according to an embodiment of this application. The system is a dual-core square-shaped system. With reference to FIG. 3, a metropolitan area network includes two core devices. The two core devices are two CRs, which are denoted as CR1 and CR2. A backbone network also includes two core devices, which are denoted as C5 and C6. CR1 is connected to C5 through a link. CR2 is connected to C6 through a link. CR1 is also connected to CR2 through a link. An EBGP peer relationship is established between CR1 and C5 and between CR2 and C6. An IBGP peer relationship is established between CR1 and CR2.

In embodiments of this application, one of CR1 and CR2 is used as a first network device, and the other is used as a second network device. When CR1 and CR2 are respectively the first network device and the second network device, C5 and C6 are respectively a third network device and a fourth network device. When CR1 and CR2 are respectively the second network device and the first network device, C5 and C6 are respectively the fourth network device and the third network device. An example in which CR1 and CR2 are respectively the first network device and the second network device and C5 and C6 are respectively the third network device and the fourth network device is used for description below.

Both CR1 and CR2 can use this solution to alleviate link congestion between the metropolitan area network and the backbone network. For example, a first link is established between CR1 and C5 through a plurality of optical fibers shown in FIG. 3. A part of the plurality of optical fibers is disconnected to cause the first link to be congested. In this case, CR1 can use this solution to alleviate the congestion of the first link.

In addition to CR1 and CR2, the metropolitan area network further includes other network devices, for example, includes at least one broadband remote access server (broadband remote access server, BRAS), such as including BRAS1 and BRAS2 shown in FIG. 3. CR1 is connected to BRAS1 and BRAS2 through links. CR2 is also connected to BRAS2 through a link. In embodiments of this application, BRAS1 and BRAS2 are respectively used as a fifth network device and a sixth network device.

In addition to C5 and C6, the backbone network further includes other network devices, for example, includes network devices that establish an EBGP peer relationship with other metropolitan area networks, such as including D1, D2, D3, and D4 shown in FIG. 3. The other metropolitan area networks include CR3, CR4, CR5, CR6, and BRAS3 shown in FIG. 3. CR3 and CR4 belong to a same metropolitan area network. CR5, CR6, and BRAS3 belong to a same metropolitan area network. This solution can also be applied to these metropolitan area networks. The backbone network is configured to transmit traffic between different metropolitan area networks.

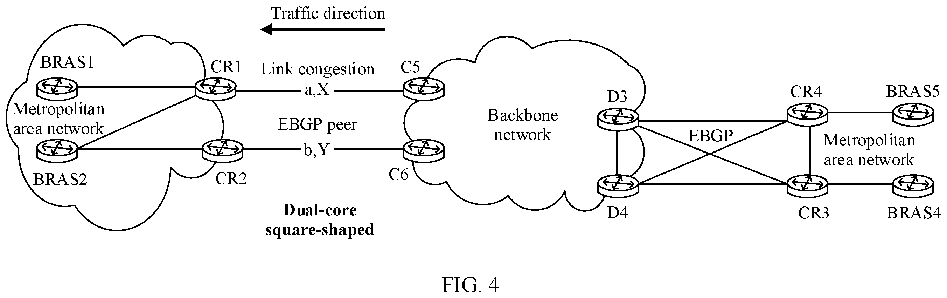

FIG. 4 is a diagram of another system architecture related to a congestion processing method according to an embodiment of this application. FIG. 4 still shows a dual-core square-shaped communication system. Differences between FIG. 4 and FIG. 3 are as follows: A backbone network in FIG. 4 does not include D1 and D2. D3, D4, CR3, and CR4 form a V-shaped networking structure. In addition, CR3 is further connected to BRAS4, and CR4 is further connected to BRAS5.

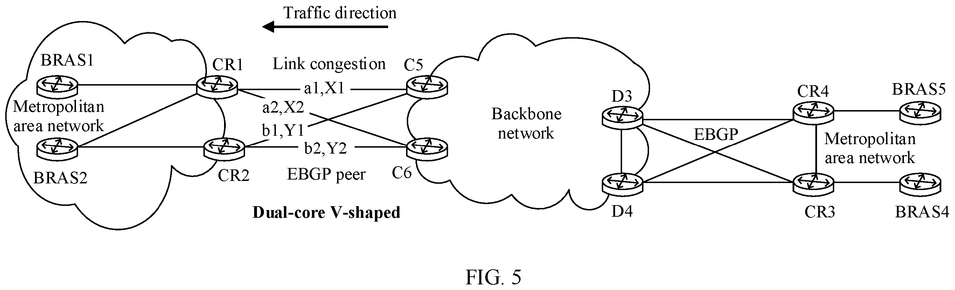

FIG. 5 is a diagram of another system architecture related to a congestion processing method according to an embodiment of this application. A difference between FIG. 5 and FIG. 4 lies in that FIG. 5 shows a dual-core V-shaped communication system. That is, in FIG. 5, CR1 is further connected to C6 through a link, and CR2 is further connected to C5 through a link.

The foregoing describes the system architecture in embodiments of this application through a networking architecture of the metropolitan area network and the backbone network. It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes the related technology.

Currently, a plurality of links to a same destination address are usually deployed in a network. If one of the plurality of links is congested or faulty, traffic on this link may be transferred to another link to relieve traffic anomaly caused by the congestion or fault.

A metropolitan area network and a backbone network are used as an example. A metro core in the metropolitan area network and a backbone core in the backbone network are EBGP peers of each other. Generally, the metropolitan area network is connected to a plurality of backbone cores in the backbone network through a plurality of metro cores. One or more links may be deployed between each metro core and each backbone core. In this way, a plurality of links between the metropolitan area network and the backbone network can be configured to balance traffic based on a load balancing ratio. If a part of the plurality of links is congested or faulty, traffic on the congested or faulty link may be transferred to another link.

However, if a plurality of links between a backbone core and a metro core are congested but not all are faulty, because the backbone core is not disconnected from the metro core, that is, an EBGP peer relationship is not disconnected, the backbone network cannot automatically sense the congestion or fault and thus cannot automatically re-allocate the load balancing ratio. Consequently, traffic congestion occurs between the backbone core and the metro core. However, manual adjustment of the load balancing ratio is inefficient and error-prone.

In the related technology, if a plurality of links exist between ASs, each link uses bandwidth information of the corresponding link as a cost (cost) value of the link. Traffic between the ASs is balanced among the plurality of links based on their cost values.

A link bandwidth extended community attribute is defined in draft-ietf-idr-link-bandwidth. When a route is received from an EBGP peer and sent to an IBGP peer, a cost value for reaching the EBGP peer is carried through this attribute. The cost value may be configured based on the EBGP peer or derived from bandwidth information of the EBGP peer. If a plurality of inter-AS paths and a plurality of EBGP peers exist between the ASs, all these peers advertise EBGP routes. A route receive end receives a plurality of routes with a same route prefix but different next hops. These routes implement load balancing and carry cost values for reaching the EBGP peers through the link bandwidth extended community attribute. Traffic with a same destination address on a plurality of network devices that perform load balancing can be load-balanced to the plurality of inter-AS paths based on the link bandwidth attribute and a load balancing ratio.

However, in the related technology, each BGP route needs to carry the link bandwidth extended community attribute. When a large quantity of routes exist and a link bandwidth frequently changes, it is easy to cause network-wide route flooding, resulting in network congestion and other problems. A function of the extended community attribute is configured and advertised for all nodes (for example, a plurality of network devices in a metropolitan area network and a plurality of devices in a backbone network) on a path through which traffic passes. In addition, load balancing node devices need to support a function of proportional load balancing among the plurality of inter-AS paths based on the link bandwidth attribute. When BGP routes on the plurality of paths cannot implement load balancing, the traffic cannot be load-balanced based on a bandwidth ratio.

To resolve the foregoing problems in the related technology, embodiments of this application provide a new link congestion processing method. The following describes the method in detail.

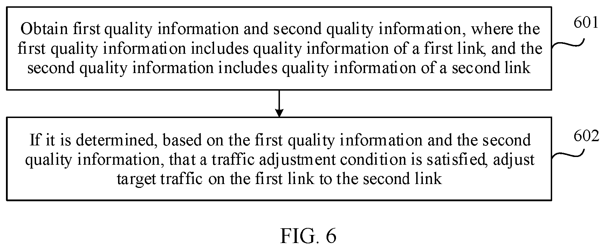

FIG. 6 is a flowchart of a link congestion processing method according to an embodiment of this application. The method is applied to a first network device. The first network device may be any first network device in the system architectures shown in FIG. 1 to FIG. 5. In embodiments of this application, the first network device belongs to a first network. The first network further includes a second network device. The first network device and the second network device are traffic ingress devices of the first network. The first network device is connected to a third network device in a second network through a first link. The second network device is connected to a fourth network device in the second network through a second link. With reference to FIG. 6, the method includes the following steps.

Step 601: Obtain first quality information and second quality information. The first quality information includes quality information of the first link. The second quality information includes quality information of the second link.

The first quality information and the second quality information are used to determine whether a traffic adjustment condition is satisfied. For an implementation in which the first network device obtains the first quality information and the second quality information, refer to related content described above. Details are not described herein again.

It can be learned from the foregoing that in some embodiments, the first network device is further connected to the fourth network device through a third link, and the second network device is further connected to the third network device through a fourth link. In this case, the first network device further obtains third quality information and fourth quality information. The third quality information includes quality information of the third link. The fourth quality information includes quality information of the fourth link. The third quality information and the fourth quality information are also used to determine whether the traffic adjustment condition is satisfied. In other words, in comparison with a square-shaped networking architecture, the first network device in a V-shaped networking architecture can obtain quality information of more links.

It can be further learned from the foregoing that in some other embodiments, the first network further includes a fifth network device. The first network device is further connected to the fifth network device through a fifth link. Optionally, the first network device further obtains fifth quality information. The fifth quality information includes quality information of the fifth link. The fifth quality information is also used to determine whether the traffic adjustment condition is satisfied. In other words, quality information of a link in the first network can also be used as a basis for determining whether traffic adjustment needs to be performed.

In embodiments of this application, the quality information includes one or more of bandwidth information, a packet loss rate, a link latency, a link congestion status, or the like. The bandwidth information includes a total bandwidth and/or a bandwidth occupancy. In other words, the bandwidth information, the packet loss rate, the link latency, the link congestion status, and the like can all be used to determine whether the traffic adjustment condition is satisfied.

Step 602: If it is determined, based on the first quality information and the second quality information, that the traffic adjustment condition is satisfied, adjust target traffic on the first link to the second link.

A plurality of implementations of determining whether the traffic adjustment condition is satisfied are first described.

In a first implementation of determining whether the traffic adjustment condition is satisfied, the traffic adjustment condition includes that the first quality information exceeds a first threshold.

It can be learned from the foregoing that the quality information includes one or more types of information. Thus, there are also a plurality of specific manners of determining whether the traffic adjustment condition is satisfied. The following describes the manners.

Manner 111: The quality information includes the bandwidth occupancy, and the traffic adjustment condition includes that the bandwidth occupancy in the first quality information exceeds the first threshold.

When the first link includes a plurality of links, the traffic adjustment condition includes that a total bandwidth occupancy of the plurality of links exceeds the first threshold, or includes that a bandwidth occupancy of any one or more of the plurality of links exceeds the first threshold.

The first threshold is 80%, 85%, 90%, or another value. To ensure reliability, the first threshold may be set to a relatively large value, for example, greater than 70%.

Manner 112: The quality information includes the packet loss rate, and the traffic adjustment condition includes that the packet loss rate in the first quality information exceeds the first threshold.

When the first link includes a plurality of links, the traffic adjustment condition includes that a total packet loss rate of the plurality of links exceeds the first threshold, or includes that a packet loss rate of any one or more of the plurality of links exceeds the first threshold.

The first threshold is 20%, 25%, 30%, or another value. To ensure reliability, the first threshold may be set to a relatively small value, for example, greater than 10%.

It should be understood that the first threshold in Manner 111 may be different from the first threshold in Manner 112. For example, the first threshold in Manner 111 is greater than the first threshold in Manner 112. This is related to physical meanings represented by the bandwidth occupancy and the packet loss rate.

Manner 113: The quality information includes the link latency, and the traffic adjustment condition includes that the link latency in the first quality information exceeds the first threshold.

When the first link includes a plurality of links, the traffic adjustment condition includes that a total latency of the plurality of links exceeds the first threshold, or includes that a latency of any one or more of the plurality of links exceeds the first threshold.

The first threshold is 500 milliseconds (ms), 1 second (s), or another value. To ensure reliability, the first threshold may be set according to a specific network requirement.

Manner 114: The quality information includes the link congestion status, and the traffic adjustment condition includes that the link congestion status in the first quality information exceeds the first threshold.

When the first link includes a plurality of links, the traffic adjustment condition includes that a congestion status of any one or more than P of the plurality of links exceeds the first threshold. P is an integer greater than 1 and less than a total quantity of the plurality of links. For example, if the quantity of the plurality of links is 5, P may be set to 2.

The link congestion status is represented by a state value, for example, represented by a first state value or a second state value. The first state value indicates that the link is congested. The second state value indicates that the link is not congested. The first state value and the second state value may be respectively 1 and 0, or may be represented by other values. In this case, the first threshold may be 0.

Alternatively, the link congestion status is represented by a congestion degree. The congestion degree is a number greater than 0 and less than 1. In this case, the first threshold is also a number greater than 0 and less than 1. For example, the first threshold herein is set in a same manner as the first threshold in Manner 11.

The quality information in Manner 111 to Manner 114 includes one type of information. The following describes, through Manner 115, a case in which the quality information includes at least two types of information.

Manner 115: The quality information includes at least two types of information in the foregoing plurality of types of information, for example, includes the bandwidth occupancy and the packet loss rate, includes the packet loss rate and the link latency, includes the link latency and the link congestion status, includes the bandwidth occupancy and the link latency, includes the bandwidth occupancy, the packet loss rate, and the link latency, or includes other cases, which are not enumerated herein. The first network device determines a weighted value of the plurality of types of information in the first quality information through weighted summation. The traffic adjustment condition includes that the weighted value of the first quality information exceeds the first threshold.

When the first link includes a plurality of links, the traffic adjustment condition includes that a total weighted value of the plurality of links exceeds the first threshold, or includes that a weighted value of any one or more of the plurality of links exceeds the first threshold. The total weighted value is determined based on at least two types of information in the total bandwidth occupancy, total packet loss rate, total link latency, and link congestion status.

The first threshold is 0.7, 0.75, or another value.

Certainly, apart from Manner 111 to Manner 115 described above, the first network device may alternatively determine, based on the obtained quality information in another manner, whether the traffic adjustment condition is satisfied.

In a second implementation of determining whether the traffic adjustment condition is satisfied, the traffic adjustment condition includes that a difference between the first quality information and the second quality information exceeds a second threshold, that is, quality of the first link is poorer than quality of the second link. In this implementation, there are also a plurality of specific manners of determining whether the traffic adjustment condition is satisfied. The following describes the manners.

Manner 121: The quality information includes the bandwidth occupancy, and the traffic adjustment condition includes that a difference between the bandwidth occupancy in the first quality information and the bandwidth occupancy in the second quality information exceeds the second threshold.

When the first link and/or the second link include/includes a plurality of links, the first network device determines a total bandwidth occupancy of the first link based on bandwidth occupancies of the plurality of links in the first quality information, and determines a total bandwidth occupancy of the second link based on bandwidth occupancies of the plurality of links in the second quality information. The traffic adjustment condition includes that a difference between the total bandwidth occupancy of the first link and the total bandwidth occupancy of the second link exceeds the second threshold, that is, the total bandwidth occupancy of the first link is greater than the total bandwidth occupancy of the second link by at least the second threshold.

The second threshold is 20%, 25%, or another value.

Manner 122: The quality information includes the packet loss rate, and the traffic adjustment condition includes that a difference between the packet loss rate in the first quality information and the packet loss rate in the second quality information exceeds the second threshold.

When the first link and/or the second link include/includes a plurality of links, the first network device determines a total packet loss rate of the first link based on packet loss rates of the plurality of links in the first quality information, and determines a total packet loss rate of the second link based on packet loss rates of the plurality of links in the second quality information. The traffic adjustment condition includes that a difference between the total packet loss rate of the first link and the total packet loss rate of the second link exceeds the second threshold, that is, the total packet loss rate of the first link is greater than the total packet loss rate of the second link by at least the second threshold.

The second threshold is 15%, 20%, or another value.

Manner 123: The quality information includes the link latency, and the traffic adjustment condition includes that a difference between the link latency in the first quality information and the link latency in the second quality information exceeds the second threshold.

When the first link and/or the second link include/includes a plurality of links, the first network device determines a total latency of the first link based on latencies of the plurality of links in the first quality information, and determines a total latency of the second link based on latencies of the plurality of links in the second quality information. The traffic adjustment condition includes that a difference between the total latency of the first link and the total latency of the second link exceeds the second threshold, that is, the total latency of the first link is greater than the total latency of the second link by at least the second threshold.

The second threshold is 100 ms, 500 ms, or another value.

Manner 124: The quality information includes the link congestion status, and the traffic adjustment condition includes that a difference between the link congestion status in the first quality information and the link congestion status in the second quality information exceeds the second threshold.

When the first link and/or the second link include/includes a plurality of links, the first network device determines a total congestion status of the first link based on congestion statuses of the plurality of links in the first quality information, and determines a total congestion status of the second link based on congestion statuses of the plurality of links in the second quality information. The traffic adjustment condition includes that a difference between the total congestion status of the first link and the total congestion status of the second link exceeds the second threshold, that is, the total congestion status of the first link is greater than the total congestion status of the second link by at least the second threshold.

The total congestion status is a proportion of a quantity of congested links in the plurality of links to a total quantity of the plurality of links. The second threshold is 0.1, 0.2, or another value.

Alternatively, the total congestion status is represented by a third state value or a fourth state value. The third state value indicates that any one link in the plurality of links is congested or any X links are congested. X is greater than 1 and less than the total quantity of the plurality of links. For example, the quantity of the plurality of links is 5, and X is 2. The fourth state value indicates that there are no congested links or there are no more than Y congested links in the plurality of links. Y is not less than 1 and is less than the total quantity of the plurality of links. For example, the quantity of the plurality of links is 4, and Y is 2. In some embodiments, the third state value and the fourth state value are respectively 1 and 0, and the second threshold is 1.

Manner 125: The quality information includes at least two types of information in the foregoing plurality of types of information, for example, includes the bandwidth occupancy and the packet loss rate, includes the bandwidth occupancy, the packet loss rate, and the link latency, or includes other cases, which are not enumerated herein. The first network device determines a weighted value of the plurality of types of information in the first quality information through weighted summation. The traffic adjustment condition includes that the weighted value of the first quality information and a weighted value corresponding to the second quality information exceed the first threshold.

When the first link and/or the second link include/includes a plurality of links, the traffic adjustment condition includes that a difference between a total weighted value of quality information of the plurality of links in the first quality information and a total weighted value of quality information of the plurality of links in the second quality information exceeds the second threshold, or includes that a difference between a weighted value of quality information of any one or more links in the first quality information and a weighted value of quality information of any one or more links in the second quality information exceeds the second threshold. The total weighted value is determined based on at least two types of information in the total bandwidth occupancy, total packet loss rate, total link latency, and link congestion status.

The second threshold is 0.2, 0.3, or another value.

Certainly, apart from Manner 121 to Manner 125 described above, the first network device may alternatively determine, based on the obtained quality information in another manner, whether the traffic adjustment condition is satisfied.

In some embodiments, the first implementation and the second implementation of determining whether the traffic adjustment condition is satisfied may be applied separately or in combination. That is, in some embodiments, the traffic adjustment condition includes that the first quality information exceeds the first threshold, and further includes that the difference between the first quality information and the second quality information exceeds the second threshold. That the first quality information exceeds the first threshold indicates that the first link is congested. That the difference between the first quality information and the second quality information exceeds the second threshold indicates that there is room on the second link to balance traffic on the first link.

In a third implementation of determining whether the traffic adjustment condition is satisfied, in addition to the traffic adjustment condition in the first implementation and/or the second implementation, the traffic adjustment condition further includes that a route adjustment policy generated by the second network device does not exist on the first network device. The route adjustment policy is used to alleviate link congestion between the first network and the second network through traffic adjustment, such as adjusting some traffic on the second link to the first link. The second network device is triggered to generate the route adjustment policy upon congestion of the second link. For another example, the route adjustment policy is used to adjust some traffic on the second link and/or the third link to the first link and/or the fourth link. Specifically, the route adjustment policy indicates the first network device to perform corresponding traffic adjustment by changing a route priority. The second network device is triggered to generate the route adjustment policy upon congestion of the second link and/or the third link. If the route adjustment policy generated by the second network device exists on the first network device, traffic that flows to the first network device according to the route adjustment policy exists on the first network device, and the first network device may also adjust the traffic, resulting in a traffic adjustment conflict. Therefore, to prevent the traffic adjustment conflict, the traffic adjustment condition further includes that the route adjustment policy generated by the second network device does not exist on the first network device.

It can be learned from the foregoing that in some embodiments, for example, in a dual-core V-shaped communication system, the first network device can further obtain the third quality information and the fourth quality information. The third quality information includes the quality information of the third link. The fourth quality information includes the quality information of the fourth link. The third link is a link between the first network device and the fourth network device. The fourth link is a link between the second network device and the third network device. In this case, the traffic adjustment condition includes one or more of the following conditions:
the first quality information and/or the fourth quality information exceed/exceeds the first threshold, that is, a link connected to the third network device is congested;
a difference between the first quality information and the third quality information exceeds the second threshold, and/or a difference between the second quality information and the fourth quality information exceeds the second threshold, that is, there is room on a link connected to the fourth network device to balance traffic on a link connected to the third network device; and
the route adjustment policy generated by the second network device does not exist on the first network device.

It should be noted that if the first link and the fourth link are links configured to perform load balancing based on a load balancing ratio, when either of the first link and the fourth link is congested, traffic on the congested link is transferred to the other link. Consequently, the fourth link may also be congested. In other words, when the first link is congested, there is a high probability that the fourth link is also congested. As a result, both the first quality information and the fourth quality information exceed the first threshold.

A specific implementation of determining whether the third quality information exceeds the first threshold is similar to the foregoing specific implementation of determining whether the first quality information exceeds the first threshold. A specific implementation of determining whether the difference between the first quality information and the third quality information exceeds the second threshold and determining whether the difference between the second quality information and the fourth quality information exceeds the second threshold is similar to the foregoing specific implementation of determining whether the difference between the first quality information and the second quality information exceeds the second threshold. Details are not described herein again.

In some other embodiments, the first network device can further obtain the fifth quality information. The fifth quality information includes the quality information of the fifth link. The fifth link is a link between the first network device and the fifth network device. In this case, in addition to the one or more conditions in the foregoing embodiments, the traffic adjustment condition further includes that the fifth quality information exceeds a seventh threshold. The seventh threshold and the first threshold are the same, or may be different. A specific implementation of determining whether the fifth quality information exceeds the seventh threshold is similar to the foregoing specific implementation of determining whether the first quality information exceeds the first threshold. Details are not described herein again.

In some cases, more than one network device may satisfy the traffic adjustment condition. For example, both the first network device and the second network device satisfy the traffic adjustment condition. In this case, to prevent a traffic adjustment conflict, one network device needs to be determined from a plurality of network devices that satisfy the traffic adjustment condition to perform traffic adjustment. For example, one network device is determined from the first network device and the second network device through an election rule to perform traffic adjustment. In other words, a network device satisfying the election rule performs traffic adjustment. For example, if the first network device satisfies the traffic adjustment condition and the election rule, the first network device performs traffic adjustment.

The election rule includes that a network device with a smallest router identifier (router-id) in the plurality of network devices that satisfy the traffic adjustment condition performs traffic adjustment. For example, if a router identifier of the first network device is less than a router identifier of the second network device, the first network device performs traffic adjustment. Alternatively, the election rule includes that a network device with a largest router identifier in the plurality of network devices that satisfy the traffic adjustment condition performs traffic adjustment. For example, if a router identifier of the first network device is greater than a router identifier of the second network device, the first network device performs traffic adjustment. Alternatively, the election rule includes a random election rule. That is, a network device that needs to perform traffic adjustment is randomly selected from the plurality of network devices that satisfy the traffic adjustment condition. Alternatively, the election rule includes another rule. A specific election rule is not limited in embodiments of this application.

It should be understood that the router identifier herein may not have a special physical meaning, and router identifier comparison is a basis for election. In some other embodiments, other information that is in a one-to-one correspondence with the network devices may alternatively be used as a basis for election. This is not limited in embodiments of this application.

After determining, in the manner described above, that traffic adjustment needs to be performed, the first network device adjusts the target traffic on the first link to the second link. This is described below.

In an implementation, the first network device first determines a traffic adjustment value, and then determines a first target flow based on the traffic adjustment value. The target traffic includes traffic of the first target flow. A traffic value of the first target flow matches the traffic adjustment value. For example, the traffic value of the first target flow does not exceed the traffic adjustment value. Certainly, in some cases, the traffic value of the first target flow is allowed to exceed the traffic adjustment value.

An implementation of determining the traffic adjustment value is first described.

Because this solution can be applied to various types of system architectures, including a square-shaped communication system and a V-shaped communication system, the following separately uses a dual-core square-shaped communication system and a dual-core V-shaped communication system as examples to describe the implementation of determining the traffic adjustment value.

A manner of determining the traffic adjustment value in the dual-core square-shaped communication system is first described.

In a first implementation of determining the traffic adjustment value, the quality information includes the total bandwidth and the bandwidth occupancy, and the first network device determines the traffic adjustment value based on the total bandwidth and the bandwidth occupancy in the first quality information and the total bandwidth and the bandwidth occupancy in the second quality information.

An implementation of determining the traffic adjustment value based on the total bandwidth and the bandwidth occupancy in the first quality information and the total bandwidth and the bandwidth occupancy in the second quality information by the first network device is as follows: determining a bandwidth ratio between the first link and the second link based on the total bandwidths in the first quality information and the second quality information; determining a first adjustment value based on the bandwidth ratio, the total bandwidth and the bandwidth occupancy in the first quality information, and the total bandwidth and the bandwidth occupancy in the second quality information, where the first adjustment value satisfies that traffic on the first link and traffic on the second link still meet the bandwidth ratio after traffic whose total size is the first adjustment value on the first link is adjusted to the second link; and determining the traffic adjustment value based on the first adjustment value.

In embodiments of this application, the total bandwidth and the bandwidth occupancy in the first quality information are respectively denoted as X and a, the total bandwidth and the bandwidth occupancy in the second quality information are respectively denoted as b and Y, the bandwidth ratio is denoted as λ, and the first adjustment value is denoted as Z1. In this case, λ = X/Y, and Z1 satisfies (aX - Z1)/(bY + Z1) = λ, that is, Z1 = (aXY - bXY)/(X + Y).

An implementation of determining the traffic adjustment value based on the first adjustment value by the first network device is as follows: determining, based on the first threshold and a total bandwidth and a bandwidth occupancy of each of at least one link connected to the fourth network device, a second adjustment value corresponding to each link, where the first threshold is a threshold used to determine link congestion; and determining a smallest one of the first adjustment value and the second adjustment value corresponding to the at least one link as the traffic adjustment value.

The first network device multiplies the total bandwidth of each link by a difference obtained by subtracting the bandwidth occupancy of the corresponding link from the first threshold, to obtain the second adjustment value corresponding to the link.

When the third link does not exist, the link connected to the fourth network device is the second link. The second adjustment value is denoted as Z2. The first threshold is denoted as T1. The traffic adjustment value is denoted as Z. In this case, Z2 = (T1 - b)*Y, and Z = min(Z1, Z2).

Another implementation of determining the traffic adjustment value based on the first adjustment value by the first network device is as follows: The first network device determines the first adjustment value as the traffic adjustment value. That is, Z = Z1.

Another implementation of determining the traffic adjustment value based on the first adjustment value by the first network device is as follows: The first network device uses an average value or a median of the first adjustment value and the second adjustment value corresponding to the at least one link as the traffic adjustment value.

A manner of determining the traffic adjustment value in the dual-core V-shaped communication system is then described.

In the dual-core V-shaped communication system, the third link and the fourth link further exist. The first network device determines a bandwidth ratio between a first plane and a second plane based on the total bandwidths in the first quality information, the second quality information, the third quality information, and the fourth quality information. A bandwidth of the first plane includes a sum of bandwidths of the first link and the fourth link. A bandwidth of the second plane includes a sum of bandwidths of the second link and the third link. The first adjustment value is determined based on the bandwidth ratio, the total bandwidth and the bandwidth occupancy in the first quality information, the total bandwidth and the bandwidth occupancy in the second quality information, the total bandwidth and the bandwidth occupancy in the third quality information, and the total bandwidth and the bandwidth occupancy in the fourth quality information.

The total bandwidth and the bandwidth occupancy in the first quality information are respectively denoted as X1 and a1. The total bandwidth and the bandwidth occupancy in the second quality information are respectively denoted as Y2 and b2. The total bandwidth and the bandwidth occupancy in the third quality information are respectively denoted as X2 and a2. The total bandwidth and the bandwidth occupancy in the fourth quality information are respectively denoted as Y1 and b1. The bandwidth ratio is denoted as λ. The first adjustment value is denoted as Z1. In this case, λ = (X1 + Y1)/(X2 + Y2), and Z1 satisfies (a1X1 + b1Y1 - Z1 - Z2)/(a2X2 + b2Y2 + Z1 + Z2) = λ, that is, Z1 = (a1X12X2 + a1X12Y2 + b1X1X2Y1 + b1X1Y1Y2 - a2X12X2 - a2X1X2Y1 - b2X12Y2 - b2X1Y1Y2)/(X12 + Y12 + X1Y2 + Y1Y2 + X1X2 + X2Y1 + 2X1Y1).

An implementation of determining the traffic adjustment value based on the first adjustment value by the first network device is as follows: determining, based on the first threshold and a total bandwidth and a bandwidth occupancy of each of at least one link connected to the fourth network device, a second adjustment value corresponding to each link, where the first threshold is a threshold used to determine link congestion; and determining a smallest one of the first adjustment value and the second adjustment value corresponding to the at least one link as the traffic adjustment value.

The first network device multiplies the total bandwidth of each link by a difference obtained by subtracting the bandwidth occupancy of the corresponding link from the first threshold, to obtain the second adjustment value corresponding to the link.

When the third link exists, links connected to the fourth network device include the second link and the third link. The second adjustment values corresponding to the second link and the third link are respectively denoted as Z21 and Z22. In this case, Z21 = (T1 - b2)*Y2, Z22 = (T1 - a2)*X2, and Z = min(Z1, Z21, Z22).

Another implementation of determining the traffic adjustment value based on the first adjustment value by the first network device is as follows: The first network device determines the first adjustment value as the traffic adjustment value. That is, Z = Z1.

Another implementation of determining the traffic adjustment value based on the first adjustment value by the first network device is as follows: The first network device uses an average value or a median of the first adjustment value and the second adjustment value corresponding to the at least one link as the traffic adjustment value.

Apart from the implementations described above, the first network device may alternatively determine the traffic adjustment value based on the obtained quality information in another manner. All possible implementations are not described one by one in embodiments of this application.

After determining the traffic adjustment value, the first network device determines the first target flow based on the traffic adjustment value. The traffic value of the first target flow matches the traffic adjustment value. That is, the first network device determines the first target flow from at least one flow on the first network device.

An implementation of determining the first target flow based on the traffic adjustment value by the first network device is as follows: selecting top N flows as the first target flow from the at least one flow in descending order of traffic size. A total traffic value of the N flows does not exceed the traffic adjustment value. N is a positive integer. Flows that need to be adjusted are selected in descending order of traffic size, so that fewer flows can be adjusted while ensuring that link congestion is alleviated, to minimize impact on the flows.

In some other embodiments, the first network device may alternatively determine the first target flow from the at least one flow in another manner, for example, through random selection or selection based on a flow identifier.

Optionally, to ensure no excessive adjustment, the total size of the N flows does not exceed α times the traffic adjustment value. α is greater than 0 and less than 1. For example, α is 0.5, 0.7, or another value.

Apart from determining the first target flow by determining the traffic adjustment value, the first network device may alternatively determine the first target flow based on a specified traffic adjustment step (which may also be referred to as a traffic adjustment unit). For example, the first network device determines at least one flow whose traffic sum is close to the traffic adjustment step on the first network device as the first target flow. An absolute value of a difference between the traffic sum and the traffic adjustment step is less than a first tolerance value. In addition, to adjust as few flows as possible, there should be as few flows as possible in the first target flow. When a plurality of flow combinations satisfy the condition of the first tolerance value, a flow combination with fewest flows in the plurality of flow combinations is selected as the first target flow. The plurality of flow combinations are different combinations of a plurality of flows on the first network device.

For example, the traffic adjustment step is 500M, the first tolerance value is 10M, there are 10 flows on the first network device, a traffic sum of 3 flows in the 10 flows is 495M, and a traffic sum of 5 flows in the 10 flows is 498M. In this case, preferentially considering a principle of adjusting fewer flows, the 3 flows are determined as the first target flow.

Before determining the first target flow, the first network device obtains traffic information of each of the at least one flow on the first network device. There are a plurality of manners of obtaining the traffic information of each flow by the first network device. For example, the first network device obtains the traffic information through a routing information base (routing information base, RIB).

For the dual-core square-shaped communication system, the first network device adjusts the first target flow to the second link after determining the first target flow. For example, the first target flow is all adjusted to the second link through one interaction procedure. Alternatively, the N flows included in the first target flow may be sequentially adjusted to the second link through a plurality of interaction procedures. Alternatively, each time a flow in the first target flow is determined, the first network device adjusts the determined flow to the second link, to sequentially determine and adjust flows through iteration, until a total traffic size of all determined flows matches the traffic adjustment value.

An implementation of adjusting the target traffic on the first link to the second link by the first network device includes: reducing a priority of a first target route sent by the first network device to the second network. A prefix of the first target route is a destination address of the target traffic. In other words, a route priority of the first target flow on the first network device is reduced. A next hop of the first target route is the first network device. This implementation is suitable for the square-shaped communication system because congestion of the first link usually does not cause congestion of the second link at the same time. The first network device can transfer the target traffic on the first link to the second link by reducing a corresponding route priority.

Another implementation of adjusting the target traffic on the first link to the second link by the first network device includes: sending a route adjustment policy to the second network device. The route adjustment policy is generated by the first network device, and indicates the second network device to increase a priority of a second target route sent by the second network device to the second network. A prefix of the second target route is the destination address of the target traffic. In other words, a route priority of the first target flow on the second network device is increased. This implementation is also suitable for the square-shaped communication system because congestion of the first link usually does not cause congestion of the second link at the same time. The second network device can transfer the target traffic on the first link to the second link by increasing a corresponding route priority.

For the dual-core V-shaped communication system, the first network device adjusts the first target flow to the second link and/or the third link after determining the first target flow. When both the third network device and the fourth network device enable a UCMP function, congestion of the first link causes congestion of the fourth link at the same time due to the UCMP function. For example, a bandwidth occupancy of the fourth link and a bandwidth occupancy of the first link are both excessively high. In this case, traffic on the first link and the fourth link needs to be adjusted to the second link and the third link. Therefore, both the first network device and the second network device need to adjust some route priorities. In this case, the first network device reduces a priority of a first target route sent by the first network device to the second network, to adjust the traffic on the first link to the second link and/or the third link. In addition, the first network device sends a route adjustment policy to the second network device. The route adjustment policy is generated by the first network device, and indicates the second network device to increase a priority of a second target route sent by the second network device to the second network, to adjust the traffic on the fourth link to the second link and/or the third link. A prefix of the first target route includes a destination address of some or all traffic in the target traffic. A prefix of the second target route includes the destination address of some or all traffic in the target traffic. In other words, a route priority of the first target flow on the first network device is reduced, and a route priority of the first target flow on the second network device is increased. A next hop of the second target route is the second network device.

In some embodiments, the network device may change the route priority by modifying med, extending as-path, or the like.

In some embodiments, the route adjustment policy is sent through an RPD route. Optionally, the first target route and the second target route are sent through BGP routes.

Steps 601 and 602 may be cyclically performed. For example, the first network device determines, based on a first cycle, whether the traffic adjustment condition is satisfied. Duration of the first cycle may be 1 minute, 2 minutes, or other duration. Certainly, steps 601 and 602 may alternatively be performed based on a first specified time. For example, the first network device determines, when the first specified time arrives, whether a traffic adjustment condition is satisfied. The first specified time may be set empirically. For example, a point in time prone to congestion is set as the first specified time.

The foregoing describes an implementation process in which the first network device performs traffic adjustment. In embodiments of this application, the second network device can also implement traffic adjustment according to a principle of the foregoing implementation process. Details are not described herein again.

When the congestion of the first link is eliminated, the first network device can further restore, to the first link, some or all of the traffic adjusted to the second link, to reduce a load of the second link. The following describes a traffic restoration process.

An example in which the first network device obtains the first quality information and the second quality information is still used. If it is determined, based on the first quality information and the second quality information, that a traffic restoration condition is satisfied, the first network device restores a part or all of the target traffic from the second link to the first link.

There are also a plurality of implementations of determining whether the traffic restoration condition is satisfied. The following describes the implementations.

In a first implementation of determining whether the traffic restoration condition is satisfied, the traffic restoration condition includes that the first quality information is less than a third threshold.

It can be learned from the foregoing that the quality information includes one or more types of information. Thus, there are also a plurality of specific manners of determining whether the traffic restoration condition is satisfied. The following describes the manners.

Manner 211: The quality information includes the bandwidth occupancy, and the traffic restoration condition includes that the bandwidth occupancy in the first quality information is less than the third threshold.

When the first link includes a plurality of links, the traffic restoration condition includes that a total bandwidth occupancy of the plurality of links is less than the third threshold, or includes that bandwidth occupancies of the plurality of links are all less than the third threshold.

The third threshold is 80%, 85%, 90%, or another value. To ensure reliability, the third threshold may be set to a relatively large value, for example, greater than 70%. Optionally, the third threshold herein is equal to the first threshold in Manner 111 above. Certainly, the third threshold herein may alternatively not be equal to the first threshold in Manner 111 above. For example, the third threshold is equal to a difference between the first threshold (such as 90%) in Manner 111 and the second threshold (such as 20%) in Manner 121 above.

Manner 212: The quality information includes the packet loss rate, and the traffic restoration condition includes that the packet loss rate in the first quality information is less than the third threshold.

When the first link includes a plurality of links, the traffic restoration condition includes that a total packet loss rate of the plurality of links is less than the third threshold, or includes that packet loss rates of the plurality of links are all less than the third threshold.

The third threshold is 20%, 25%, 30%, or another value. To ensure reliability, the third threshold may be set to a relatively small value, for example, greater than 10%. Optionally, the third threshold herein is equal to the first threshold in Manner 112 above. Certainly, the third threshold herein may alternatively not be equal to the first threshold in Manner 112 above. For example, the third threshold is equal to a difference between the first threshold (such as 90%) in Manner 112 and the second threshold (such as 20%) in Manner 122 above.

It should be understood that the third threshold in Manner 211 may be different from the third threshold in Manner 212. For example, the third threshold in Manner 211 is greater than the third threshold in Manner 212. This is related to physical meanings represented by the bandwidth occupancy and the packet loss rate.

Manner 213: The quality information includes the link latency, and the traffic restoration condition includes that the link latency in the first quality information is less than the third threshold.

When the first link includes a plurality of links, the traffic restoration condition includes that a total latency of the plurality of links is less than the third threshold, or includes that latencies of the plurality of links are all less than the third threshold.

The third threshold is 500 ms, 1s, or another value. To ensure reliability, the third threshold may be set according to a specific network requirement.

Manner 214: The quality information includes the link congestion status, and the traffic restoration condition includes that the link congestion status in the first quality information is less than the third threshold.

When the first link includes a plurality of links, the traffic adjustment condition includes that congestion statuses of more than K links in the plurality of links are less than the third threshold, or includes that congestion statuses of the plurality of links are all less than the third threshold. K is an integer greater than or equal to 1 and less than a total quantity of the plurality of links. For example, if the quantity of the plurality of links is 5, K may be set to 3 or 4.

The link congestion status is represented by a state value, for example, represented by a first state value or a second state value. The first state value indicates that the link is congested. The second state value indicates that the link is not congested. The first state value and the second state value may be respectively 1 and 0, or may be represented by other values. In this case, the third threshold may be 1.

Alternatively, the link congestion status is represented by a congestion degree. The congestion degree is a number greater than 0 and less than 1. In this case, the third threshold is also a number greater than 0 and less than 1. For example, the third threshold herein is set in a same manner as the third threshold in Manner 211.

The quality information in Manner 211 to Manner 214 includes one type of information. The following describes, through Manner 215, a case in which the quality information includes at least two types of information.

Manner 215: The quality information includes at least two types of information in the foregoing plurality of types of information, for example, includes the packet loss rate and the link latency, includes the bandwidth occupancy, the packet loss rate, and the link latency, or includes other cases, which are not enumerated herein. The first network device determines a weighted value of the plurality of types of information in the first quality information through weighted summation. The traffic restoration condition includes that the weighted value of the first quality information is less than the third threshold.

When the first link includes a plurality of links, the traffic restoration condition includes that a total weighted value of the plurality of links is less than the third threshold, includes that a weighted value of each of the plurality of links is less than the third threshold, or includes that weighted values of at least K links in the plurality of links are less than the third threshold. K herein may be equal to K in Manner 214. The total weighted value is determined based on at least two types of information in the total bandwidth occupancy, total packet loss rate, total link latency, and link congestion status.

The third threshold is 0.7, 0.75, or another value.

Certainly, apart from Manner 211 to Manner 215 described above, the first network device may alternatively determine, based on the obtained quality information in another manner, whether the traffic restoration condition is satisfied.

In a second implementation of determining whether the traffic restoration condition is satisfied, the traffic restoration condition includes that the second quality information exceeds a fourth threshold, and/or a difference between the second quality information and the first quality information exceeds a fifth threshold, that is, the quality of the second link is poorer than the quality of the first link. That the second quality information exceeds the fourth threshold indicates that the second link is congested. That the difference between the second quality information and the first quality information exceeds the fifth threshold indicates that there is room on the first link to balance traffic on the second link.

The fourth threshold is equal to the first threshold or the third threshold. The fifth threshold is equal to the second threshold. Certainly, the fifth threshold may alternatively not be equal to the second threshold.

A specific implementation of determining whether the second quality information exceeds the fourth threshold is similar to the foregoing specific implementation of determining whether the first quality information exceeds the first threshold. A specific implementation of determining whether the difference between the second quality information and the first quality information exceeds the fifth threshold is similar to the foregoing specific implementation of determining whether the difference between the first quality information and the second quality information exceeds the second threshold. Details are not described herein again.

In an embodiment in which the first network device can further obtain the third quality information and the fourth quality information, for example, in the dual-core V-shaped communication system, the traffic restoration condition includes one or more of the following conditions:
(1) both the first quality information and the third quality information are less than the third threshold, that is, congestion of a link connected to the third network device is eliminated;
(2) a difference between the first quality information and the third quality information exceeds the second threshold, and/or a difference between the fourth quality information and the second quality information exceeds the second threshold, that is, there is room on a link connected to the fourth network device to balance traffic on a link connected to the third network device; and
(3) both the first quality information and the third quality information are less than the third threshold, and the second quality information and/or the third quality information exceed/exceeds the fourth threshold, that is, congestion of a link connected to the third network device is eliminated, and a link connected to the fourth network device is congested.

A specific implementation of determining whether the third quality information is less than the third threshold is similar to the foregoing specific implementation of determining whether the first quality information is less than the third threshold. A specific implementation of determining whether the third quality information exceeds the fourth threshold is similar to the foregoing specific implementation of determining whether the first quality information exceeds the first threshold. A specific implementation of determining whether the difference between the first quality information and the third quality information exceeds the second threshold and determining whether the difference between the fourth quality information and the second quality information exceeds the second threshold is similar to the foregoing specific implementation of determining whether the difference between the first quality information and the second quality information exceeds the second threshold. Details are not described herein again.

When the first network device further includes the fifth quality information, optionally, in addition to the one or more conditions in the foregoing embodiments, the traffic restoration condition further includes that the fifth quality information is less than an eighth threshold. The eighth threshold and the third threshold are the same, or may be different. A specific implementation of determining whether the fifth quality information is less than the eighth threshold is similar to the foregoing specific implementation of determining whether the first quality information is less than the third threshold. Details are not described herein again.

In the dual-core square-shaped communication system, the first network device restores a part or all of the target traffic from the second link to the first link after determining that the traffic restoration condition is satisfied. In the dual-core V-shaped communication system, the first network device restores a part or all of the target traffic from the second link or the third link to the first link or the fourth link after determining that the traffic restoration condition is satisfied. The first network device may restore traffic by changing a route priority as described in a traffic adjustment process.

In embodiments of this application, the first network device selects top M flows from a flow corresponding to the target traffic as a second target flow in ascending order of traffic size, and restores the second target flow from the second link to the first link. M is a positive integer. In other words, considering that neither the first link nor the second link is congested in this case, to prevent traffic flapping caused by excessive traffic adjustment, that is, to prevent a large traffic fluctuation, flows that need to be restored are sequentially selected in ascending order of traffic size. Certainly, in another embodiment, the first network device may alternatively select, according to another rule, the flows that need to be restored.

The flows corresponding to the target traffic include the foregoing first target flow. The first target flow includes N flows. N is not less than M.

To prevent excessive restoration, at least one flow in the first target flow is restored to the first link (or as well as the fourth link) in one traffic restoration process. When the first link (or as well as the fourth link) remains uncongested continuously, the other flows in the first target flow may be gradually restored in subsequent traffic restoration processes.

Based on this, a total size of the M flows does not exceed a sixth threshold. The sixth threshold may be determined based on the total bandwidth of the first link. For example, the sixth threshold is β times the total bandwidth of the first link. β may be 5%, 10%, or another value. Alternatively, the sixth threshold may be determined based on the foregoing traffic adjustment value. For example, the sixth threshold is half of or another multiple of the foregoing traffic adjustment value. Alternatively, the sixth threshold may be determined based on a size of the target traffic. For example, the sixth threshold is half of or another multiple of the size of the target traffic. Alternatively, the sixth threshold may be determined according to other principles, which are not enumerated herein.

It should be noted that before the first target flow is restored to the first link (or as well as the fourth link), because the first target flow does not exist on the first link (or as well as the fourth link), in some cases, the first network device may not be able to obtain a current traffic size of each flow in the first target flow. Therefore, in this case, the first network device may select the M flows from the first target flow based on a traffic size of the first target flow at the time of the adjustment.

Certainly, if the first network device can obtain a real-time traffic size of each flow in the first target flow through some methods, the first network device may select the M flows from the first target flow based on the real-time traffic size of each flow in the first target flow. Certainly, because a traffic size of the first target flow may not change much before and after the adjustment, to simplify a procedure, even if the first network device can obtain the real-time traffic size of each flow in the first target flow through some methods, the first network device may select the M flows from the first target flow based on a traffic size of each flow in the first target flow at the time of the adjustment.

Apart from determining the second target flow through the foregoing method, the first network device may alternatively determine the second target flow based on a specified traffic restoration step (which may also be referred to as a traffic restoration unit). For example, the first network device determines at least one flow whose traffic sum is close to the traffic restoration step in the first target flow as the second target flow. An absolute value of a difference between the traffic sum and the traffic restoration step is less than a second tolerance value. In addition, to adjust as few flows as possible, there should be as few flows as possible in the second target flow. When a plurality of flow combinations satisfy the condition of the first tolerance value, a flow combination with fewest flows in the plurality of flow combinations is selected as the second target flow. The plurality of flow combinations are different combinations of a plurality of flows in the first target flow.

In embodiments of this application, both the traffic restoration step and the traffic adjustment step may be set, or only one of them may be set. When both the traffic restoration step and the traffic adjustment step are set, the traffic restoration step may be the same as or different from the traffic adjustment step. For example, the traffic restoration step is half of the traffic adjustment step.

Optionally, the first network device determines, based on a second cycle, whether the traffic restoration condition is satisfied. Duration of the second cycle may be 1 minute, 2 minutes, or other duration. Optionally, the second cycle is the same as the foregoing first cycle. Certainly, the second cycle may alternatively be different from the first cycle. Alternatively, the first network device may perform the determining operation based on a second specified time. For example, the first network device determines, when the second specified time arrives, whether the traffic adjustment process is satisfied. The second specified time may be set empirically or based on the foregoing first specified time. For example, the first specified time plus specific duration (such as 10s, 30s, or another duration) is used as the second specified time.

The foregoing describes an implementation process in which the first network device performs traffic restoration. In embodiments of this application, the second network device can also implement traffic restoration according to a principle of the foregoing implementation process. Details are not described herein again.

Considering that anomaly may occur in the traffic adjustment process, if anomaly occurs in a process of performing traffic adjustment by the first network device, the first network device exits the traffic adjustment process.

In an embodiment in which the third link and the fourth link do not exist, the anomaly includes at least one of the following cases: traffic on the second link is being adjusted to the first link; and the first network device is disconnected from the third network device.

That the traffic on the second link is being adjusted to the first link indicates that the second network device is performing traffic adjustment. To prevent a traffic adjustment conflict, the first network device needs to exit the traffic adjustment process. However, if the first network device is disconnected from the third network device, the second network senses the disconnection, and may resolve a network interruption in another manner.

In an embodiment in which the third link and the fourth link exist, the anomaly includes at least one of the following cases: traffic on the second link and/or the fourth link is being adjusted to the first link and/or the third link; the first network device is disconnected from the third network device; and the first network device is disconnected from the fourth network device.

It can be learned from the foregoing description that a core idea of embodiments of this application is to detect a congestion condition of an inter-AS link in real time by collecting quality information of the inter-AS link. When it is determined that congestion occurs, a size of traffic that needs to be adjusted and the traffic that needs to be adjusted are determined based on the congestion condition and a bandwidth of the link. In this way, a route priority is changed to affect path selection of a data flow, to adjust the traffic and alleviate the congestion.

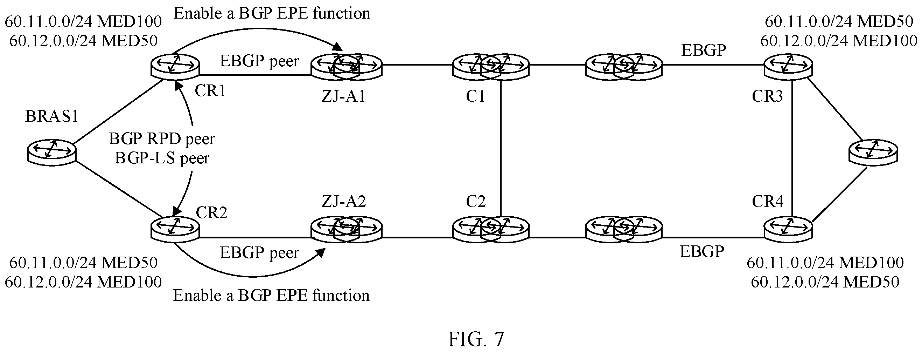

The following describes this solution again by using an example with reference to FIG. 7 to FIG. 9B.

FIG. 7 is a diagram of another system architecture related to a congestion processing method according to an embodiment of this application. FIG. 7 shows a dual-core square-shaped communication system similar to that in FIG. 4. CR1 and CR2 and BRAS1 on the left side in FIG. 7 belong to a first network. CR1 and CR2 are IBGP peers of each other, which may be specifically BGP RPD peers and BGP-LS peers. ZJ-A1, ZJ-A2, C1, and C2 belong to a second network. ZJ-A1 and ZJ-A2 are respectively connected to CR1 and CR2 through links, that is, an EBGP peer relationship is established between ZJ-A1 and CR1 and between ZJ-A2 and CR2. ZJ-A1 and ZJ-A2 are further respectively connected to C1 and C2, and are connected to CR3 and CR4 in a third network through C1 and C2 (or through more network devices as shown in FIG. 7). The second network is configured to transfer traffic between the first network and the third network.

BGP routes recorded on CR1 include 60.11.0.0/24 MED100 and 60.12.0.0/24 MED50. BGP routes recorded on CR2 include 60.11.0.0/24 MED50 and 60.12.0.0/24 MED100. BGP routes recorded on CR3 include 60.11.0.0/24 MED50 and 60.12.0.0/24 MED100. BGP routes recorded on CR2 include 60.11.0.0/24 MED100 and 60.12.0.0/24 MED50. 60.11.0.0/24 and 60.12.0.0/24 represent route prefixes. MED is short for multi-exit discriminator (multi exit discriminator). MED is a BGP attribute. Different values of the MED attribute are used to determine an optimal route in a case of a same destination address but different values of an attribute (for example, different next hops or different values of another attribute). A network device can change a route priority by changing a value of the MED attribute. It can be learned that different values of the MED attribute are recorded on CR1 and CR2 for a same route prefix. Similarly, different values of the MED attribute are recorded on CR3 and CR4 for a same route prefix.

As shown in FIG. 7, a BGP EPE function is enabled on CR1 and CR2 for EBGP peers to obtain quality information of links, including a link congestion status, a total bandwidth, a bandwidth utilization, and the like. A BGP-LS route is generated based on the EBGP peer relationship. The obtained quality information is exchanged through the BGP-LS route. In addition, a BGP RPD address family peer relationship and a BGP-LS address family peer relationship are established between CR1 and CR2.

CR1 and CR2 respectively obtain traffic information corresponding to RIB egress routes from CR1 to ZJ-A1 and from CR2 to ZJ-A2, that is, obtain a traffic size of a flow corresponding to each RIB egress route.

If at least one link between CR1 and ZJ-A1 is congested due to a traffic burst or faulty, CR1 determines, based on the quality information, that a traffic adjustment condition is satisfied, determines a traffic adjustment value based on the total bandwidth and the bandwidth utilization in the obtained quality information, and determines, based on the traffic adjustment value, a first target flow that needs to be adjusted on the link between CR1 and ZJ-A1. CR1 generates a traffic optimization policy based on the first target flow, and applies the traffic optimization policy to an egress policy of a route from CR1 to ZJ-A1, where the traffic optimization policy includes, for example, reducing a BGP route priority corresponding to a part of the first target flow on CR1; and/or CR1 generates an RPD route and sends the RPD route to CR2 to apply the RPD route to an egress policy of a route from CR2 to ZJ-A2, where the RPD route indicates to increase a BGP route priority corresponding to a part of the first target flow on CR2. An adjusted BGP route priority is propagated to the second network and the third network along with the BGP route.

Through the foregoing procedure, priorities of some routes received by ZJ-A1 and ZJ-A2 change, and a route of ZJ-A2 is preferentially selected in the second network, to adjust a traffic path.

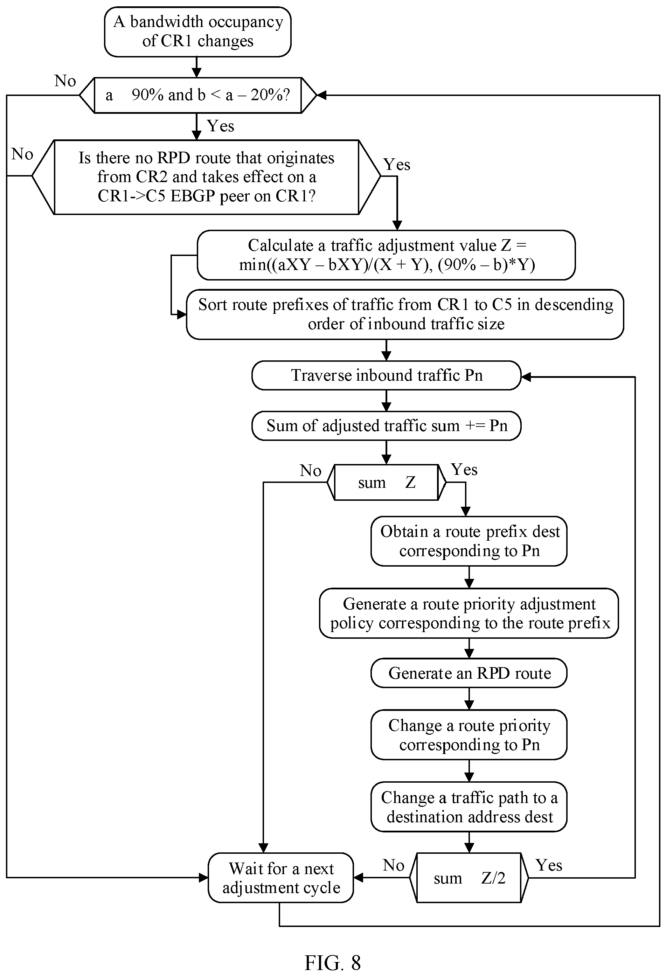

FIG. 8 is a flowchart of another link congestion processing method according to an embodiment of this application. The flowchart is based on the dual-core square-shaped system architecture shown in FIG. 4.

Basic configurations and prerequisites of a procedure shown in FIG. 8 include the following:
1. An EBGP peer is established between CR1 and C5 and between CR2 and C6 through a loopback interface. A plurality of physical links exist between the devices.
2. It is assumed that congestion occurs when a bandwidth occupancy is greater than or equal to 90%.
3. If a difference between bandwidth occupancies of different paths CR1-C5 and CR2-C6 is greater than 20%, there is traffic adjustment room.
4. CR1 collects link statuses, total bandwidths, and bandwidth occupancies of CR1-C5 and CR2-C6 through a BGP-LS route, and collects information about inbound traffic corresponding to a prefix of a BGP route CR1->C5.
5. X represents the total bandwidth of CR1-C5. a represents the bandwidth occupancy of CR1-C5. Y represents the total bandwidth of CR2-C6. b represents the bandwidth occupancy of CR2-C6. A bandwidth ratio is as follows: λ = X/Y.

A traffic adjustment condition (using adjustment for CR1 as an example) of the procedure shown in FIG. 8 includes the following:
1. A part of links between CR1 and C5 is faulty and the EBGP peer is not disconnected, or is congested due to a traffic burst (a ≥ 90%).
2. CR2-C6 has traffic adjustment room (b < a - 20%) and is not congested (b < 90%).
3. No RPD route that originates from CR2 and takes effect on the CR1->C5 EBGP peer exists on CR1.

If CR1 determines that the foregoing traffic adjustment condition is satisfied, CR1 calculates a traffic adjustment value Z = min((aXY - bXY)/(X + Y), (90% - b)*Y), sorts route prefixes of traffic from CR1 to C5 in descending order of inbound traffic size, sequentially traverses a plurality of flows from CR1 to C5, calculates whether a sum (denoted as sum) of a traffic size Pn of a flow being traversed and a traffic size of traversed flows exceeds Z, and waits for a next adjustment cycle if sum exceeds Z. If sum does not exceed Z, CR1 obtains a route prefix corresponding to Pn, where the route prefix is a destination address dest corresponding to Pn, generates a route priority adjustment policy corresponding to the route prefix, generates an RPD route, and changes a route priority corresponding to Pn based on the route priority adjustment policy and the RPD route, to change a traffic path to the destination address dest. Then, CR1 calculates whether sum exceeds Z/2 (to prevent excessive adjustment), and waits for the next adjustment cycle if sum exceeds Z/2; or continues to traverse a next flow if sum does not exceed Z/2.

A traffic restoration condition corresponding to the procedure shown in FIG. 8 includes:
1. A locally generated RPD route exists on CR1.
2. Congestion of CR1 is eliminated, that is, a < 90% - 20%, and/or CR2 satisfies the traffic adjustment condition, that is, b > 90% and a < b - 20%.

If CR1 determines that the foregoing traffic restoration condition is satisfied, route prefixes of adjusted traffic recorded on CR1 are sorted in ascending order of traffic size at the time of the adjustment, and some or all of the traffic is sequentially restored. For example, corresponding information in a locally recorded route priority adjustment policy is deleted. For another example, an RPD route that is of a corresponding flow and that is sent to CR2 is deleted from the route adjustment policy. To prevent excessive restoration, traffic that does not exceed 5% of the total bandwidth of the link between CR1 and C5 needs to be restored in one adjustment procedure.

Anomaly processing method corresponding to the procedure shown in FIG. 8 includes: If CR1 receives an RPD route that originates from CR2 and takes effect on CR1->C5 in the traffic adjustment process, and a router identifier of CR1 is larger, CR1 exits the traffic adjustment process and revokes the corresponding policy and generated RPD route.

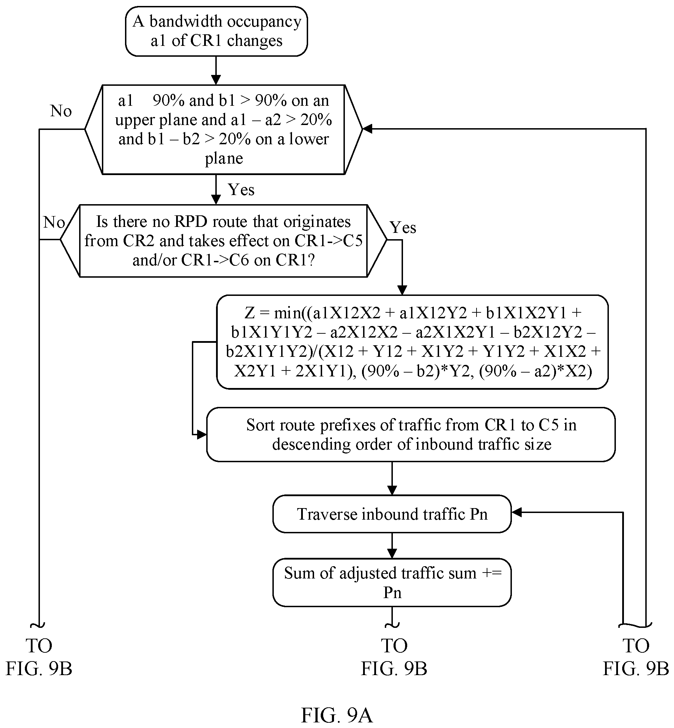

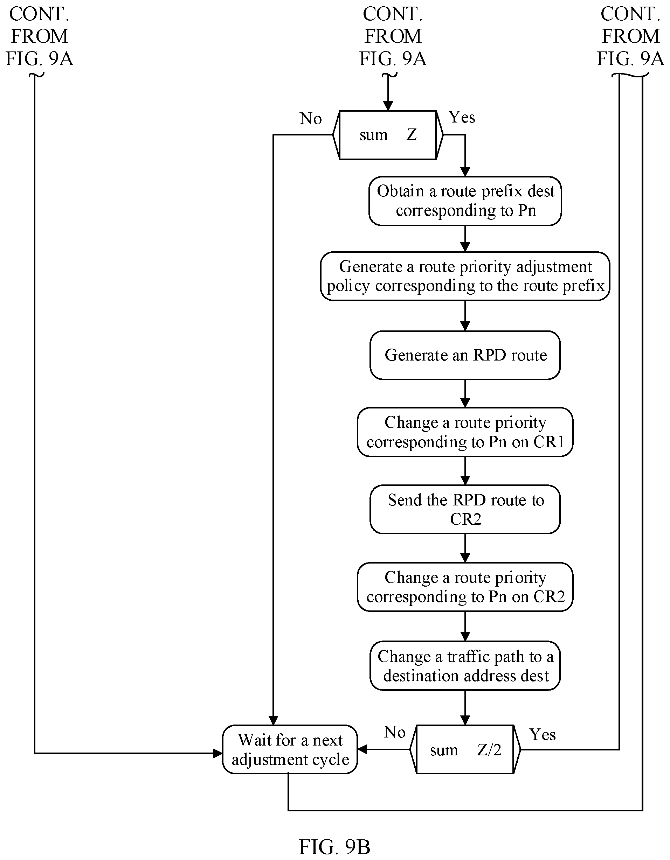

FIG. 9A and FIG. 9B are a flowchart of another link congestion processing method according to an embodiment of this application. The flowchart is based on the dual-core V-shaped system architecture shown in FIG. 5.

Basic configurations and prerequisites of a procedure shown in FIG. 9A and FIG. 9B include the following:
1. An EBGP peer is established between CR1 and C5, between CR1 and C6, between CR2 and C5, and between CR2 and C6 through a loopback interface. It is assumed that CR1-C5 and CR2-C5 are on an upper plane, and CR1-C6 and CR2-C6 are on a lower plane. A plurality of physical links exist between EBGP peers.
2. C5 supports UCMP. That is, traffic on C5 can be load-balanced based on a bandwidth ratio between C5-CR1 and C5-CR2. C6 also supports UCMP. That is, traffic on C6 can be load-balanced based on a bandwidth ratio between C6-CR1 and C6-CR2.
3. It is assumed that congestion occurs when a bandwidth occupancy is greater than or equal to 90%.
4. If a difference between bandwidth occupancies of the upper plane and the lower plane is greater than 20%, there is traffic adjustment room.
5. CR1 collects quality information of links CR1-C5, CR1-C6, CR2-C5, and CR2-C6 through a BGP-LS route, including link congestion statuses, total bandwidths, bandwidth occupancies, and the like. CR1 also collects information about inbound traffic corresponding to prefixes of BGP routes CR1->C5 and CR1->C6.
6. X1 represents the total bandwidth of CR1-C5. a1 represents the bandwidth occupancy of CR1-C5. X2 represents the total bandwidth of CR1-C6. a2 represents the bandwidth occupancy of CR1-C6. Y1 represents the total bandwidth of CR2-C5. b1 represents the bandwidth occupancy of CR2-C5. Y2 represents the total bandwidth of CR2-C6. b2 represents the bandwidth occupancy of CR2-C6. A bandwidth ratio is as follows: λ = (X1 + Y1)/(X2 + Y2).

If a part of links between CR1 and C5 is faulty and the EBGP peer is not disconnected, or is congested due to a traffic burst (a1 ≥ 90%), traffic is preferentially adjusted to the bandwidth ratio X1/Y1 on the upper plane on which CR1-C5 and CR2-C5 reside because C5 supports UCMP. Consequently, links corresponding to a1 and b1 are congested. Similarly, if a part of links between CR2 and C5 is faulty or congested, the bandwidth ratio is preferentially adjusted to X1/Y1 on the upper plane on which CR1-C5 and CR2-C5 reside.

Based on this, if CR1 determines that the foregoing traffic adjustment condition is satisfied, CR1 calculates a traffic adjustment value Z = min((a1X12X2 + a1X12Y2 + b1X1X2Y1 + b1X1Y1Y2 - a2X12X2 - a2X1X2Y1 - b2X12Y2 - b2X1Y1Y2)/(X12 + Y12 + X1Y2 + Y1Y2 + X1X2 + X2Y1 + 2X1Y1), (90% - b2)*Y2, (90% - a2)*X2), sorts route prefixes of traffic from CR1 to C5 in descending order of inbound traffic size, sequentially traverses a plurality of flows from CR1 to C5, calculates whether a sum (denoted as sum) of a traffic size Pn of a flow being traversed and a traffic size of traversed flows exceeds Z, and waits for a next adjustment cycle if sum exceeds Z. If sum does not exceed Z, CR1 obtains a route prefix corresponding to Pn, where the route prefix is a destination address dest corresponding to Pn, generates a route priority adjustment policy corresponding to the route prefix, generates an RPD route, changes a route priority corresponding to Pn on CR1 based on the route priority adjustment policy and the RPD route, and sends the RPD route to CR2 to change a route priority corresponding to Pn on CR2, to change a traffic path to the destination address dest. Then, CR1 calculates whether sum exceeds Z/2 (to prevent excessive adjustment), and waits for the next adjustment cycle if sum exceeds Z/2; or continues to traverse a next flow if sum does not exceed Z/2.

A traffic restoration condition corresponding to the procedure shown in FIG. 9A and FIG. 9B includes:
1. A locally generated RPD route exists on CR1.
2. Congestion on the upper plane is eliminated, that is, a1 < 90% - 20% and b1 < 90% - 20%; or congestion on the lower plane satisfies the traffic adjustment condition, that is, a2 > 90%, b2 > 90%, a1 < a2 - 20%, and b1 < b2 - 20%.

If CR1 determines that the foregoing traffic restoration condition is satisfied, route prefixes of adjusted traffic recorded on CR1 are sorted in ascending order of traffic size at the time of the adjustment, and some or all of the traffic is sequentially restored. For example, corresponding information in a locally recorded route priority adjustment policy is deleted. For another example, an RPD route that is of a corresponding flow and that is sent to CR2 is deleted from the route adjustment policy. To prevent excessive restoration, traffic that does not exceed 5% of the total bandwidth of the link between CR1 and C5 needs to be restored in one adjustment procedure.

Anomaly processing method corresponding to the procedure shown in FIG. 8 includes:
1. If CR1 receives an RPD route that originates from CR2 and takes effect on the CR1->C5 EBGP peer in the traffic adjustment process, and a router identifier of CR1 is larger, CR1 exits the traffic adjustment process and revokes the generated RPD route.
2. If CR1 is disconnected from C5 and/or CR1 is disconnected from C6 in the traffic adjustment process of CR1, CR1 exits the traffic adjustment process and revokes the generated RPD route.

In summary, in embodiments of this application, a traffic ingress device in the first network can obtain quality information of a link with the second network, determine a congestion status based on the quality information, and perform traffic adjustment if the link is congested. In this solution, traffic adjustment can be implemented by changing a route priority. A link congestion processing function in this solution is configured only for the traffic ingress device in the first network, and no additional configuration is needed for all network devices on the link. In the related technology, a link bandwidth extended community attribute needs to be configured and advertised for all node devices on a path through which traffic passes. Therefore, this solution does not depend on another device, and is simple to deploy and easy to promote and implement. This solution also does not require load balancing among BGP routes on a plurality of links, to resolve a problem that traffic cannot be adjusted based on the link bandwidth attribute in a scenario of no load balancing among BGP routes. This solution also does not require frequent BGP route changes, so that network-wide route flooding does not occur.

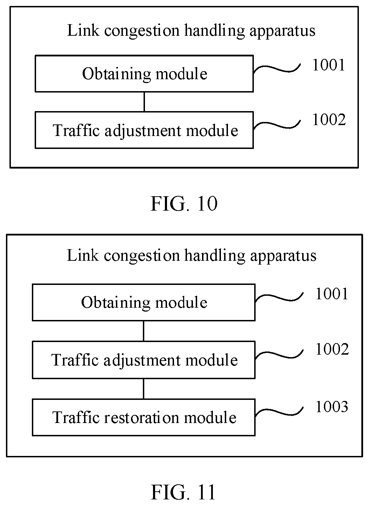

FIG. 10 is a diagram of a structure of a link congestion processing apparatus according to an embodiment of this application. The link congestion processing apparatus may be implemented as a part or all of a network device through software, hardware, or a combination thereof. The network device may be any network device shown in FIG. 1. In embodiments of this application, the link congestion processing apparatus is included in a first network device. The first network device belongs to a first network. The first network further includes a second network device. The first network device and the second network device are traffic ingress devices of the first network. The first network device is connected to a third network device in a second network through a first link. The second network device is connected to a fourth network device in the second network through a second link. With reference to FIG. 10, the link congestion processing apparatus includes an obtaining module 1001 and a traffic adjustment module 1002.

The obtaining module 1001 is configured to obtain first quality information and second quality information. The first quality information includes quality information of the first link. The second quality information includes quality information of the second link.

The traffic adjustment module 1002 is configured to: if it is determined, based on the first quality information and the second quality information, that a traffic adjustment condition is satisfied, adjust target traffic on the first link to the second link.

Optionally, the quality information includes one or more of bandwidth information, a packet loss rate, a link latency, or a link congestion status.

Optionally, the bandwidth information includes a total bandwidth and/or a bandwidth occupancy.

Optionally, the traffic adjustment condition includes that the first quality information exceeds a first threshold.

Optionally, the traffic adjustment condition includes that a difference between the first quality information and the second quality information exceeds a second threshold.

Optionally, the traffic adjustment condition includes that a route adjustment policy generated by the second network device does not exist on the first network device. The route adjustment policy is used to alleviate link congestion between the first network and the second network through traffic adjustment.

Optionally, the quality information includes the total bandwidth and the bandwidth occupancy.

The traffic adjustment module 1002 includes:
a first determining submodule, configured to determine a traffic adjustment value based on the total bandwidth and the bandwidth occupancy in the first quality information and the total bandwidth and the bandwidth occupancy in the second quality information;
a second determining submodule, configured to determine a first target flow based on the traffic adjustment value, where a traffic value of the first target flow matches the traffic adjustment value; and
a traffic adjustment submodule, configured to adjust the first target flow to the second link.

Optionally, the first determining submodule is specifically configured to:
determine a bandwidth ratio between the first link and the second link based on the total bandwidths in the first quality information and the second quality information;
determine a first adjustment value based on the bandwidth ratio, the total bandwidth and the bandwidth occupancy in the first quality information, and the total bandwidth and the bandwidth occupancy in the second quality information, where the first adjustment value satisfies that traffic on the first link and traffic on the second link still meet the bandwidth ratio after traffic whose total size is the first adjustment value on the first link is adjusted to the second link; and
determine the traffic adjustment value based on the first adjustment value.

Optionally, the first determining submodule is specifically configured to:
determine, based on the first threshold and a total bandwidth and a bandwidth occupancy of each of at least one link connected to the fourth network device, a second adjustment value corresponding to each link, where the first threshold is a threshold used to determine link congestion; and
determine a smallest one of the first adjustment value and the second adjustment value corresponding to the at least one link as the traffic adjustment value.

Optionally, the second determining submodule is specifically configured to:
select top N flows from at least one flow as the first target flow in descending order of traffic size, where a total traffic value of the N flows does not exceed the traffic adjustment value, and N is a positive integer.

Optionally, the total size of the N flows does not exceed α times the traffic adjustment value. α is greater than 0 and less than 1.

Optionally, the traffic adjustment module 1002 includes:
a priority change submodule, configured to reduce a priority of a first target route sent by the first network device to the second network, where a prefix of the first target route is a destination address of the target traffic.

Optionally, the traffic adjustment module 1002 includes:
a policy sending module, configured to send a route adjustment policy to the second network device, where the route adjustment policy indicates the second network device to increase a priority of a second target route sent by the second network device to the second network, and a prefix of the second target route is the destination address of the target traffic.

Optionally, the route adjustment policy is sent through an RPD route.

Optionally, the target route is sent through a BGP route.

Optionally, with reference to FIG. 11, the link congestion processing apparatus further includes:
a traffic restoration module 1003, configured to: if it is determined, based on the first quality information and the second quality information, that a traffic restoration condition is satisfied, restore a part or all of the target traffic from the second link to the first link.

Optionally, the traffic restoration condition includes that the first quality information is less than a third threshold.

Optionally, the traffic restoration condition includes that the second quality information exceeds a fourth threshold, and/or a difference between the second quality information and the first quality information exceeds a fifth threshold.

Optionally, the traffic restoration module 1003 includes:
a traffic selection submodule, configured to select top M flows from a flow corresponding to the target traffic as a second target flow in ascending order of traffic size, where M is a positive integer; and
a traffic restoration submodule, configured to restore the second target flow from the second link to the first link.

Optionally, a total size of the M flows does not exceed a sixth threshold.

Optionally, the link congestion processing apparatus further includes:
an exiting module, configured to: if anomaly occurs in a traffic adjustment process, exit the traffic adjustment process.

The anomaly includes at least one of the following cases:
traffic on the second link is being adjusted to the first link; and
the first network device is disconnected from the third network device.

Optionally, the first network device is further connected to the fourth network device through a third link, and the second network device is further connected to the third network device through a fourth link. The obtaining module 1001 is further configured to:
obtain third quality information and fourth quality information, where the third quality information includes quality information of the third link, the fourth quality information includes quality information of the fourth link, and the third quality information and the fourth quality information are also used to determine whether the traffic adjustment condition is satisfied.

Optionally, the first network further includes a fifth network device, and the first network device is further connected to the fifth network device through a fifth link. The obtaining module 1001 is further configured to:
obtain fifth quality information, where the fifth quality information includes quality information of the fifth link, and the fifth quality information is also used to determine whether the traffic adjustment condition is satisfied.

Optionally, the second quality information is obtained through a BGP-LS route.

Optionally, an EBGP peer relationship is established between the first network device and the third network device and between the second network device and the fourth network device; and/or
an IBGP peer relationship is established between the first network device and the second network device and between the third network device and the fourth network device.

In embodiments of this application, a traffic ingress device in the first network can obtain quality information of a link with the second network, determine a congestion status based on the quality information, and perform traffic adjustment if the link is congested. In this solution, traffic adjustment can be implemented by changing a route priority. A link congestion processing function in this solution is configured only for the traffic ingress device in the first network, and no additional configuration is needed for all network devices on the link. In the related technology, a link bandwidth extended community attribute needs to be configured and advertised for all node devices on a path through which traffic passes. Therefore, this solution does not depend on another device, and is simple to deploy and easy to promote and implement. This solution also does not require load balancing among BGP routes on a plurality of links, to resolve a problem that traffic cannot be adjusted based on the link bandwidth attribute in a scenario of no load balancing among BGP routes. This solution also does not require frequent BGP route changes, so that network-wide route flooding does not occur.

It should be noted that when the link congestion processing apparatus provided in the foregoing embodiments processes link congestion, division into the foregoing functional modules is merely used as an example for description. During actual application, the foregoing functions may be allocated to and completed by different functional modules as required, that is, an internal structure of the apparatus is divided into different functional modules to complete all or some of the foregoing functions. In addition, the link congestion processing apparatus provided in the foregoing embodiments and embodiments of the link congestion processing method belong to a same idea. For a specific implementation process, refer to the method embodiments. Details are not described herein again.

Embodiments of this application further provide a communication system. The system includes a first network device and a second network device. The first network device and the second network device are traffic ingress devices of a first network. The first network device is connected to a third network device in a second network through a link. The second network device is connected to a fourth network device in the second network through a link. The first network device is configured to perform steps of the link congestion processing method provided in embodiments of this application. The communication system and embodiments of the link congestion processing method belong to a same idea. For a specific implementation, refer to embodiments in FIG. 1 to FIG. 9B. Details are not described herein again.

Embodiments of this application further provide a network device. The following describes a structure and function of the network device.

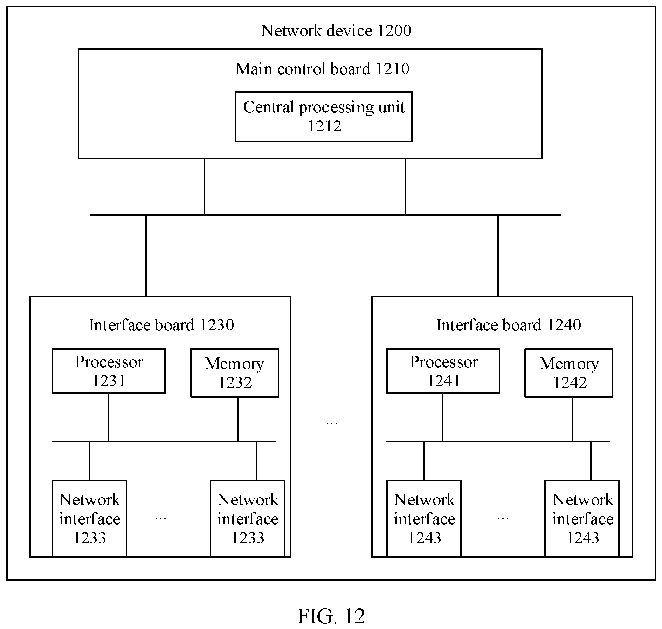

FIG. 12 is a diagram of a structure of a network device according to an embodiment of this application. The network device 1200 may be the network device in any one of the foregoing embodiments. The network device 1200 may be a switch, a router, or another network device that forwards a packet. In this embodiment, the network device 1200 includes a main control board 1210, an interface board 1230, and an interface board 1240. When there are a plurality of interface boards, a switching board (not shown in the figure) may be included. The switching board is configured to complete data exchange between interface boards (the interface board is also referred to as a line card or a service board).

The main control board 1210 is configured to complete functions such as system management, device maintenance, and protocol processing. The interface boards 1230 and 1240 are configured to provide various service interfaces (such as a POS interface, a GE interface, and an ATM interface), and forward a data flow. The main control board 1210 mainly includes three types of functional units: a system management and control unit, a system clock unit, and a system maintenance unit. The main control board 1210, the interface board 1230, and the interface board 1240 are connected to a system backplane through a system bus to implement interworking. The interface board 1230 includes one or more processors 1231. The processor 1231 is configured to control and manage the interface board, communicate with a central processing unit on the main control board, and forward a data flow. A memory 1232 on the interface board 1230 is configured to store a forwarding entry. The processor 1231 forwards a data flow by searching the forwarding entry stored in the memory 1232.

The interface board 1230 includes one or more network interfaces 1233, configured to receive a data flow or other information sent by a terminal or another network device, and process the data flow or the data based on indications of the processor 1231. A specific implementation process is not described herein one by one.

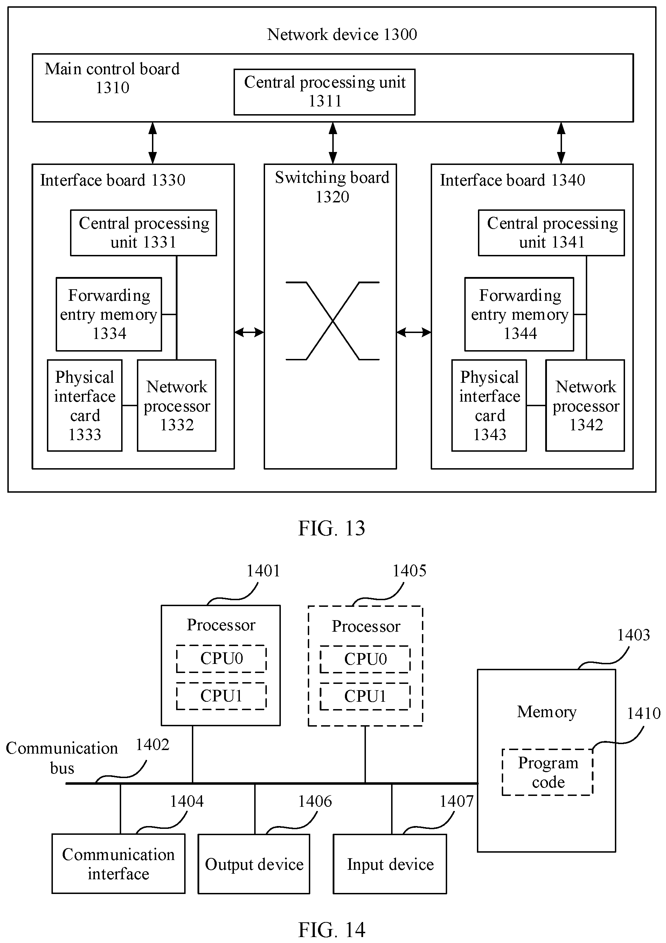

It may be understood that, as shown in FIG. 12, this embodiment of this application includes a plurality of interface boards, and uses a distributed forwarding mechanism. In this mechanism, operations on the interface board 1240 are basically similar to operations on the interface board 1230. For brevity, details are not described again. In addition, it may be understood that the processor 1231 in the interface board 1230 and/or a processor 1241 in the interface board 1240 in FIG. 12 may be dedicated hardware or a chip, for example, a network processor or an application-specific integrated circuit (application-specific integrated circuit, ASIC), to implement the foregoing functions. This implementation is generally referred to as a manner of using dedicated hardware or a chip for processing on a forwarding plane. For a specific implementation of using the dedicated hardware or the chip such as the network processor, refer to the following embodiment shown in FIG. 13. In another implementation, the processor 1231 and/or the processor 1241 may alternatively use a general-purpose processor, for example, a general-purpose CPU, to implement the following functions.

In addition, it should be noted that there may be one or more main control boards. When there are a plurality of main control boards, the main control boards may include a primary main control board and a secondary main control board. There may be one or more interface boards. The device with a stronger data processing capability provides more interface boards. In a case of a plurality of interface boards, the plurality of interface boards may communicate with each other through one or more switching boards. When there are a plurality of switching boards, load balancing and redundancy backup may be implemented by them together. In a centralized forwarding architecture, the device may not need a switching board, and the interface board provides a function of processing service data of an entire system. In a distributed forwarding architecture, the device includes a plurality of interface boards, and may implement data exchange between the plurality of interface boards through the switching board, to provide a largecapacity data exchange and processing capability. Therefore, a data access and processing capability of the network device in the distributed architecture is better than that of a device in a centralized architecture. A specific architecture to be used depends on a specific networking deployment scenario. This is not limited herein.

In some embodiments, the memory 1232 and/or a memory 1242 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible by a computer. However, this is not limited hereto. The memory 1232 may exist independently, and is connected to the processor 1231 through a communication bus. The memory 1232 may alternatively be integrated with the processor 1231. Similarly, the memory 1242 may exist independently, and is connected to the processor 1241 through a communication bus; or the memory 1242 may be integrated with the processor 1241.

In some embodiments, the network interface 1233 may be configured to communicate with another device or a communication network such as an Ethernet, a radio access network (radio access network, RAN), or a wireless local area network (wireless local area network, WLAN) through any apparatus such as a transceiver. The network interface 1233 includes a wired network interface, and may further include a wireless network interface. The wired network interface may be, for example, an Ethernet interface. The Ethernet interface may be an optical interface, an electrical interface, or a combination thereof. The wireless network interface may be a WLAN interface, a cellular network communication interface, a combination thereof, or the like. When the network device is used as any network device in an AS, the network interface 1233 is configured to forward a data packet to another network device.

In some embodiments, the network device may include a plurality of processors. Each of the processors may be a single-core processor or a multi-core processor. The processor herein may be one or more devices, circuits, and/or processing cores configured to process data (for example, computer program instructions).

In some embodiments, the memory 1232 is configured to store program code for executing the solutions of this application. The processor 1231 may execute the program code stored in the memory 1232, to enable the network device 1200 to perform the processing steps of the network device in embodiments shown in FIG. 1 to FIG. 11. For a specific implementation, refer to detailed descriptions in embodiments shown in FIG. 1 to FIG. 11. Details are not described herein again.

In another embodiment, the program code may include one or more software modules. For example, when the obtaining module 1001 and the traffic adjustment module 1002 in the embodiment shown in FIG. 10 are implemented through software, the program code may include an obtaining module and a traffic adjustment module. The obtaining module is configured to obtain at least first quality information and second quality information. The traffic adjustment module is configured to perform traffic adjustment based on the obtained quality information through the link congestion processing method provided in embodiments of this application. For a specific implementation, refer to detailed descriptions in embodiments shown in FIG. 6 to FIG. 9B. Details are not described herein again.

FIG. 13 is a diagram of a structure of another network device according to an embodiment of this application. The network device 1300 may be the network device in any one of the foregoing embodiments. In this embodiment, the network device 1300 includes a main control board 1310, an interface board 1330, a switching board 1320, and an interface board 1340. The main control board 1310 is configured to complete functions such as system management, device maintenance, and protocol processing. The switching board 1320 is configured to complete data exchange between interface boards (the interface board is also referred to as a line card or a service board). The interface boards 1330 and 1340 are configured to provide various service interfaces (such as a POS interface, a GE interface, and an ATM interface), and forward a data packet. A control plane includes management and control units on the main control board 1310 and management and control units on the interface boards 1330 and 1340. The main control board 1310 mainly includes three types of functional units: a system management and control unit, a system clock unit, and a system maintenance unit. The main control board 1310, the interface board 1330, the interface board 1340, and the switching board 1320 are connected to a system backplane through a system bus to implement interworking. A central processing unit 1331 on the interface board 1330 is configured to control and manage the interface board, and communicate with a central processing unit on the main control board. A forwarding entry memory 1334 on the interface board 1330 is configured to store a forwarding entry. A network processor 1332 forwards a data flow by searching the forwarding entry stored in the forwarding entry memory 1334.

A physical interface card 1333 of the interface board 1330 is configured to receive a data flow or other data sent by a terminal or another device. A specific implementation process is not described herein one by one.

The network processor 1332 is configured to process a received data flow and the like. Specific functions of the network processor 1332 are not described herein one by one. For example, the network processor 1332 may execute program code, to enable the network device 1300 to perform the processing steps of the network device or device in embodiments shown in FIG. 1 to FIG. 11. For a specific implementation, refer to detailed descriptions in embodiments shown in FIG. 1 to FIG. 11. Details are not described herein again.

It may be understood that, as shown in FIG. 13, this embodiment of this application includes a plurality of interface boards, and uses a distributed forwarding mechanism. In this mechanism, operations on the interface board 1340 are basically similar to operations on the interface board 1330. For brevity, details are not described again. In addition, as described above, functions of the network processor 1332 and a network processor 1342 in FIG. 13 may be replaced with those of an application-specific integrated circuit (application-specific integrated circuit).

In addition, it should be noted that there may be one or more main control boards. When there are a plurality of main control boards, the main control boards may include a primary main control board and a secondary main control board. There may be one or more interface boards. The device with a stronger data processing capability provides more interface boards. There may also be one or more physical interface cards on the interface board. There may be no switching board or one or more switching boards. When there are a plurality of switching boards, load balancing and redundancy backup may be implemented by them together. In a centralized forwarding architecture, the device may not need a switching board, and the interface board provides a function of processing service data of an entire system. In a distributed forwarding architecture, the device may include at least one switching board, and implement data exchange between the plurality of interface boards through the switching board, to provide a largecapacity data exchange and processing capability. Therefore, a data access and processing capability of the network device in the distributed architecture is better than that of a device in a centralized architecture. A specific architecture to be used depends on a specific networking deployment scenario. This is not limited herein.

FIG. 14 is a diagram of a structure of a network device according to an embodiment of this application. Optionally, the network device is the network device in embodiments shown in FIG. 1 to FIG. 10. The network device includes one or more processors 1401, a communication bus 1402, a memory 1403, and one or more communication interfaces 1404.

The processor 1401 is a general-purpose central processing unit (central processing unit, CPU), a network processor (NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable gate array (field-programmable gate array, FPGA), generic array logic (generic array logic, GAL), or any combination thereof. When the network device is any network device in embodiments of this application, the processor 1401 is configured to implement the link congestion processing method provided in any one of the embodiments shown in FIG. 6 to FIG. 9B.

The communication bus 1402 is configured to transfer information between the components. Optionally, the communication bus 1402 may be classified as an address bus, a data bus, a control bus, or the like. For ease of representation, only one thick line is used to represent the bus in FIG. 14, but this does not indicate that there is only one bus or only one type of bus.

Optionally, the memory 1403 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible by a computer. However, this is not limited hereto. The memory 1403 exists independently, and is connected to the processor 1401 through the communication bus 1402, or the memory 1403 is integrated with the processor 1401.

The communication interface 1404 is configured to communicate with another device or a communication network through any apparatus such as a transceiver. The communication interface 1504 includes a wired communication interface, and optionally further includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like. When the network device is used as any network device in an AS, the communication interface 1404 is configured to forward a data packet to another network device.

Optionally, in some embodiments, the network device includes a plurality of processors, for example, the processor 1401 and a processor 1405 shown in FIG. 14. Each of the processors is a single-core processor or a multi-core processor. Optionally, the processor herein is one or more devices, circuits, and/or processing cores configured to process data (for example, computer program instructions).

In some embodiments, the network device further includes an output device 1406 and an input device 1407. The output device 1406 communicates with the processor 1401, and can display information in a plurality of manners. For example, the output device 1406 is a liquid crystal display (liquid crystal display, LCD), a light emitting diode (light emitting diode, LED) display device, a cathode ray tube (cathode ray tube, CRT) display device, or a projector (projector). The input device 1407 communicates with the processor 1401, and can receive an input of a user in a plurality of manners. For example, the input device 1407 is a mouse, a keyboard, a touchscreen device, or a sensing device.

In some embodiments, the memory 1403 is configured to store program code 1410 for executing the solutions of this application. The processor 1401 can execute the program code 1410 stored in the memory 1403, to enable the network device to perform the processing steps of the network device in embodiments shown in FIG. 1 to FIG. 11. For a specific implementation, refer to detailed descriptions in embodiments shown in FIG. 1 to FIG. 10. Details are not described herein again.

In another embodiment, the program code may include one or more software modules. For example, when the obtaining module 1001 and the traffic adjustment module 1002 in the embodiment shown in FIG. 10 are implemented through software, the program code may include an obtaining module and a traffic adjustment module. The obtaining module is configured to obtain at least first quality information and second quality information. The traffic adjustment module is configured to perform traffic adjustment based on the obtained quality information through the link congestion processing method provided in embodiments of this application. For a specific implementation, refer to detailed descriptions in embodiments shown in FIG. 6 to FIG. 9B. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, that is, may be a non-transitory storage medium.

It should be understood that "at least one" in this specification means one or more, and "a plurality of" means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions. For example, both the quality information and the traffic information in embodiments of this application are obtained under full authorization.

The foregoing descriptions are merely embodiments of this application, but are not intended to limit this application. Any modification, equivalent replacement, or improvement made without departing from the spirit and principle of this application shall fall within the protection scope of this application.

## Claims

1. A link congestion processing method, applied to a first network device, wherein the first network device belongs to a first network, the first network further comprises a second network device, the first network device and the second network device are traffic ingress devices of the first network, the first network device is connected to a third network device in a second network through a first link, and the second network device is connected to a fourth network device in the second network through a second link; and the method comprises:
obtaining first quality information and second quality information, wherein the first quality information comprises quality information of the first link, and the second quality information comprises quality information of the second link; and
if it is determined, based on the first quality information and the second quality information, that a traffic adjustment condition is satisfied, adjusting target traffic on the first link to the second link.

2. The method according to claim 1, wherein the quality information comprises one or more of bandwidth information, a packet loss rate, a link latency, or a link congestion status.

3. The method according to claim 2, wherein the bandwidth information comprises a total bandwidth and/or a bandwidth occupancy.

4. The method according to any one of claims 1 to 3, wherein the traffic adjustment condition comprises that the first quality information exceeds a first threshold.

5. The method according to any one of claims 1 to 4, wherein the traffic adjustment condition comprises that a difference between the first quality information and the second quality information exceeds a second threshold.

6. The method according to any one of claims 1 to 5, wherein the traffic adjustment condition comprises that a route adjustment policy generated by the second network device does not exist on the first network device, and the route adjustment policy is used to alleviate link congestion between the first network and the second network through traffic adjustment.

7. The method according to any one of claims 1 to 6, wherein the quality information comprises the total bandwidth and the bandwidth occupancy; and
adjusting the target traffic on the first link to the second link comprises:
determining a traffic adjustment value based on the total bandwidth and the bandwidth occupancy in the first quality information and the total bandwidth and the bandwidth occupancy in the second quality information;
determining a first target flow based on the traffic adjustment value, wherein a traffic value of the first target flow matches the traffic adjustment value; and
adjusting the first target flow to the second link.

8. The method according to claim 7, wherein determining the traffic adjustment value based on the total bandwidth and the bandwidth occupancy in the first quality information and the total bandwidth and the bandwidth occupancy in the second quality information comprises:
determining a bandwidth ratio between the first link and the second link based on the total bandwidths in the first quality information and the second quality information;
determining a first adjustment value based on the bandwidth ratio, the total bandwidth and the bandwidth occupancy in the first quality information, and the total bandwidth and the bandwidth occupancy in the second quality information, wherein the first adjustment value satisfies that traffic on the first link and traffic on the second link still meet the bandwidth ratio after traffic whose total size is the first adjustment value on the first link is adjusted to the second link; and
determining the traffic adjustment value based on the first adjustment value.

9. The method according to claim 8, wherein determining the traffic adjustment value based on the first adjustment value comprises:
determining, based on the first threshold and a total bandwidth and a bandwidth occupancy of each of at least one link connected to the fourth network device, a second adjustment value corresponding to each link, wherein the first threshold is a threshold used to determine link congestion; and
determining a smallest one of the first adjustment value and the second adjustment value corresponding to the at least one link as the traffic adjustment value.

10. The method according to any one of claims 7 to 9, wherein determining the first target flow based on the traffic adjustment value comprises:
selecting top N flows from at least one flow as the first target flow in descending order of traffic size, wherein a total traffic value of the N flows does not exceed the traffic adjustment value, and N is a positive integer.

11. The method according to claim 10, wherein the total size of the N flows does not exceed α times the traffic adjustment value, and α is greater than 0 and less than 1.

12. The method according to any one of claims 1 to 11, wherein adjusting the target traffic on the first link to the second link comprises:
reducing a priority of a first target route sent by the first network device to the second network, wherein a prefix of the first target route is a destination address of the target traffic.

13. The method according to any one of claims 1 to 12, wherein adjusting the target traffic on the first link to the second link comprises:
sending a route adjustment policy to the second network device, wherein the route adjustment policy indicates the second network device to increase a priority of a second target route sent by the second network device to the second network, and a prefix of the second target route is the destination address of the target traffic.

14. The method according to claim 13, wherein the route adjustment policy is sent through a routing policy distribution RPD route.

15. The method according to any one of claims 12 to 14, wherein the target route is sent through a border gateway protocol BGP route.

16. The method according to any one of claims 1 to 15, wherein the method further comprises:
if it is determined, based on the first quality information and the second quality information, that a traffic restoration condition is satisfied, restoring a part or all of the target traffic from the second link to the first link.

17. The method according to claim 16, wherein the traffic restoration condition comprises that the first quality information is less than a third threshold.

18. The method according to claim 16 or 17, wherein the traffic restoration condition comprises that the second quality information exceeds a fourth threshold, and/or a difference between the second quality information and the first quality information exceeds a fifth threshold.

19. The method according to any one of claims 16 to 18, wherein restoring the part or all of the target traffic from the second link to the first link comprises:
selecting top M flows from a flow corresponding to the target traffic as a second target flow in ascending order of traffic size, wherein M is a positive integer; and
restoring the second target flow from the second link to the first link.

20. The method according to claim 19, wherein a total size of the M flows does not exceed a sixth threshold.

21. The method according to any one of claims 1 to 20, wherein the method further comprises:
if anomaly occurs in a traffic adjustment process, exiting the traffic adjustment process; wherein
the anomaly comprises at least one of the following cases:
traffic on the second link is being adjusted to the first link; and
the first network device is disconnected from the third network device.

22. The method according to any one of claims 1 to 21, wherein the first network device is further connected to the fourth network device through a third link, and the second network device is further connected to the third network device through a fourth link; and the method further comprises:
obtaining third quality information and fourth quality information, wherein the third quality information comprises quality information of the third link, the fourth quality information comprises quality information of the fourth link, and the third quality information and the fourth quality information are also used to determine whether the traffic adjustment condition is satisfied.

23. The method according to any one of claims 1 to 22, wherein the first network further comprises a fifth network device, the first network device is further connected to the fifth network device through a fifth link, and the method further comprises:
obtaining fifth quality information, wherein the fifth quality information comprises quality information of the fifth link, and the fifth quality information is also used to determine whether the traffic adjustment condition is satisfied.

24. The method according to any one of claims 1 to 23, wherein the second quality information is obtained through a border gateway protocol-link state BGP-LS route.

25. The method according to any one of claims 1 to 24, wherein an external border gateway protocol EBGP peer relationship is established between the first network device and the third network device and between the second network device and the fourth network device; and/or
an internal border gateway protocol IBGP peer relationship is established between the first network device and the second network device and between the third network device and the fourth network device.

26. A communication apparatus, wherein the apparatus comprises a processor and a memory;
the memory is configured to store a computer program; and
the processor is configured to implement steps of the method according to any one of claims 1 to 25 when executing the computer program.

27. A communication system, wherein the system comprises a first network device and a second network device, the first network device and the second network device are traffic ingress devices of a first network, the first network device is connected to a third network device in a second network through a link, and the second network device is connected to a fourth network device in the second network through a link; and
the first network device is configured to perform steps of the method according to any one of claims 1 to 25.

28. A computer-readable storage medium, wherein the storage medium stores a computer program, and when the computer program is executed by a processor, the method according to any one of claims 1 to 25 is implemented.

29. A computer program product, wherein the computer program product stores computer instructions, and when the computer instructions are executed by a processor, steps of the method according to any one of claims 1 to 25 are implemented.
